# EUROPEAN PATENT APPLICATION

(11) **EP 4 564 319 A1**
(43) Date of publication of application: **04.06.2025**
(21) Application number: 23862266.6
(22) Date of filing: 31.08.2023
(51) Int. Cl.: G06V 40/12, G07C 9/00, G06T 7/00

(54) **FINGERPRINT RECOGNITION METHOD AND ELECTRONIC DEVICE**

(30) Priority: 05.09.2022 CN 202211080091; 27.10.2022 CN 202211327573
(71) Applicant: Huawei Technologies Co., Ltd., Shenzhen, Guangdong 518129 (CN)
(72) Inventor: SONG, Ping, Shenzhen, Guangdong 518129 (CN); HAN, Yaohui, Shenzhen, Guangdong 518129 (CN)
(74) Representative: Gill Jennings & Every LLP
(86) International application number: PCT/CN2023/116191
(87) International publication number: WO 2024/051572

(57) **Abstract**

This application provides a fingerprint recognition method and an electronic device, and relates to the field of terminal technologies. In this application, the electronic device concurrently triggers fingerprint recognition in a first fingerprint recognition mode and fingerprint recognition in a second fingerprint recognition mode in response to a received input fingerprint, so that fingerprint recognition accuracy and fingerprint recognition efficiency of the electronic device are balanced, thereby improving user experience. The method includes: The electronic device verifies, in response to the received input fingerprint, the input fingerprint in the first fingerprint recognition mode and the second fingerprint recognition mode; determines a verification result based on a first fingerprint recognition result determined in the first fingerprint recognition mode and/or a second fingerprint recognition result determined in the second fingerprint recognition mode, where the verification result indicates whether the input fingerprint is successfully verified; and determines, based on the verification result, whether to perform an operation on the electronic device.

## Description

This application claims priority to Chinese Patent Application No. 202211080091.5, filed with the China National Intellectual Property Administration on September 5, 2022 and entitled "FINGERPRINT RECOGNITION METHOD AND ELECTRONIC DEVICE", and Chinese Patent Application No. 202211327573.6, filed with the China National Intellectual Property Administration on October 27, 2022 and entitled "FINGERPRINT RECOGNITION METHOD AND ELECTRONIC DEVICE", which are incorporated herein by reference in their entireties.

### TECHNICAL FIELD

Embodiments of this application relate to the field of terminal technologies, and in particular, to a fingerprint recognition method and an electronic device.

### BACKGROUND

As the smart home industry advances, a growing number of consumers use electronic devices (for example, smart door locks) with a fingerprint recognition function, so that a user can quickly unlock a door through a fingerprint without a key.

Currently, a fingerprint recognition function of an electronic device commonly used by the user has low recognition accuracy, leading to poor recognition performance in some scenarios and resulting in poor user experience. Therefore, a high-accuracy fingerprint recognition function is configured in some electronic devices, to improve fingerprint recognition effect. However, a high-accuracy fingerprint recognition process involves slow loading of a high-accuracy fingerprint recognition algorithm and a template fingerprint, leading to a long waiting time for fingerprint recognition and affecting user experience as well.

### SUMMARY

To resolve the foregoing technical problem, this application provides a fingerprint recognition method and an electronic device. According to the technical solutions provided in this application, the electronic device concurrently triggers fingerprint recognition in a first fingerprint recognition mode and fingerprint recognition in a second fingerprint recognition mode in response to a received input fingerprint. In this way, fingerprint recognition accuracy and fingerprint recognition efficiency of the electronic device can be balanced, thereby improving user experience.

Providing a user with a fingerprint recognition method and an electronic device that balance the fingerprint recognition efficiency and the recognition accuracy has become our requirement.

To achieve the foregoing technical objective, this application provides the following technical solutions.

According to a first aspect, a fingerprint recognition method is provided, and is applied to an electronic device. The method includes: verifying, in response to a received input fingerprint, the input fingerprint in a first fingerprint recognition mode and a second fingerprint recognition mode; obtaining a verification result, where the verification result is a result determined based on a first fingerprint recognition result and/or a second fingerprint recognition result, the first fingerprint recognition result is a fingerprint recognition result determined in the first fingerprint recognition mode, the second fingerprint recognition result is a fingerprint recognition result determined in the second fingerprint recognition mode, and the verification result indicates whether the input fingerprint is successfully verified; and determining, based on the verification result, whether to perform an operation on the electronic device.

The first fingerprint recognition mode and the second fingerprint recognition mode are different fingerprint recognition modes. For example, the first fingerprint recognition mode is a match on chip (match on chip, MOC) mode, and the second fingerprint recognition mode is a match on host (match on host, MOH) mode. For another example, the first fingerprint recognition mode is the MOH mode, and the second fingerprint recognition mode is the MOC mode.

In this way, the electronic device performs recognition and verification of the input fingerprint by concurrently executing different fingerprint recognition modes, so that fingerprint recognition accuracy and fingerprint recognition efficiency of the electronic device are balanced. This improves user experience while meeting an unlocking requirement of a user.

According to the first aspect, the obtaining a verification result includes: when determining, in the first fingerprint recognition result or the second fingerprint recognition result, that a previously obtained fingerprint recognition result is that fingerprint recognition succeeds, directly determining that the obtained verification result indicates that the input fingerprint is successfully verified.

For example, the electronic device concurrently performs fingerprint recognition on the input fingerprint in the first fingerprint recognition mode and the second fingerprint recognition mode. In this case, fingerprint recognition results may be successively determined in the two fingerprint recognition modes. For example, the previously determined fingerprint recognition result is a first recognition result, and the first recognition result may be the first fingerprint recognition result determined in the first fingerprint recognition mode, or may be the second fingerprint recognition result determined in the second fingerprint recognition mode. For another example, a subsequently determined fingerprint recognition result is a second recognition result, and the second recognition result may be the first fingerprint recognition result determined in the first fingerprint recognition mode, or may be the second fingerprint recognition result determined in the second fingerprint recognition mode.

In this way, the electronic device may determine, based on the previously obtained fingerprint recognition result, whether the input fingerprint is successfully verified and whether a corresponding operation, for example, unlocking, can be performed, thereby effectively improving fingerprint recognition efficiency of the electronic device.

According to the first aspect or any implementation of the first aspect, the method further includes: discarding a subsequently obtained fingerprint recognition result in the first fingerprint recognition result or the second fingerprint recognition result; or stopping obtaining a subsequent fingerprint recognition result.

In this way, after determining, based on the previously obtained fingerprint recognition result, that the input fingerprint is successfully verified, the electronic device may directly discard a fingerprint recognition result that is no longer needed and that is obtained subsequently, or stop obtaining the subsequent fingerprint recognition result, thereby saving computing resources of the electronic device and reducing power consumption.

According to the first aspect or any implementation of the first aspect, the obtaining a verification result includes: when determining, in the first fingerprint recognition result or the second fingerprint recognition result, that a previously obtained fingerprint recognition result is that fingerprint recognition fails, determining the verification result based on a subsequently obtained fingerprint recognition result.

According to the first aspect or any implementation of the first aspect, the determining the verification result based on a subsequently obtained fingerprint recognition result includes: when determining that the subsequently obtained fingerprint recognition result is that fingerprint recognition succeeds, determining that the obtained verification result indicates that the input fingerprint is successfully verified; or when determining that the subsequently obtained fingerprint recognition result is that fingerprint recognition fails, determining that the obtained verification result indicates that the input fingerprint fails to be verified.

For example, the electronic device first determines, in the MOC mode, that the input fingerprint fails to be verified, and then the electronic device can further obtain the subsequently determined fingerprint recognition result based on the MOH mode that is concurrently executed. Fingerprint recognition accuracy of the MOH mode is higher than fingerprint recognition accuracy of the MOC mode. Therefore, in some scenarios in which a fingerprint of a person is unclear due to a wet or dirty hand or the like, a fingerprint of an elderly person may fade due to aging, or a fingerprint of a child is not clear enough or is excessively small due to ongoing growth, the electronic device can still improve the fingerprint recognition accuracy through fingerprint recognition in the MOH mode.

In this way, when determining that the previously obtained fingerprint recognition result is that verification fails, the electronic device can alternatively determine, based on the subsequently obtained fingerprint recognition result, whether the input fingerprint is successfully verified, thereby increasing a success rate of fingerprint recognition for a single fingerprint input by the user.

According to the first aspect or any implementation of the first aspect, the obtaining a verification result includes: when determining that both the first fingerprint recognition result and the second fingerprint recognition result are that fingerprint recognition succeeds, determining that the verification result indicates that the input fingerprint is successfully verified; or when determining that either the first fingerprint recognition result or the second fingerprint recognition result is that fingerprint recognition fails, determining that the verification result indicates that the input fingerprint fails to be verified.

In this way, the electronic device determines the verification result in a dual authentication manner, thereby improving reliability of the verification result.

According to the first aspect or any implementation of the first aspect, when the verification result indicates that the input fingerprint is successfully verified, the method further includes: by using the input fingerprint, updating a first template fingerprint corresponding to the first fingerprint recognition mode, and/or updating a second template fingerprint corresponding to the second fingerprint recognition mode.

In this way, update frequencies of template fingerprints in fingerprint recognition modules corresponding to the first fingerprint recognition mode and the second fingerprint recognition mode are increased, thereby avoiding problems of a slow fingerprint recognition speed and a reduced success rate caused by not updating the template fingerprints for a long time.

According to the first aspect or any implementation of the first aspect, the verifying, in response to a received input fingerprint, the input fingerprint in a first fingerprint recognition mode and a second fingerprint recognition mode includes: after receiving the input fingerprint, determining that the second fingerprint recognition mode does not enter a fingerprint-recognizable state; and verifying the input fingerprint in the first fingerprint recognition mode.

In some embodiments, the second fingerprint recognition mode does not enter the fingerprint-recognizable state, for example, the second fingerprint recognition mode is in an initialization process. Therefore, in the initialization process, the electronic device cannot perform fingerprint recognition in the second fingerprint recognition mode, that is, the second fingerprint recognition mode does not enter the fingerprint-recognizable state.

**In** some embodiments, before the second fingerprint recognition mode enters the fingerprint-recognizable state, for example, the electronic device determines the previous first recognition result in the first fingerprint recognition mode.

**In** this case, the electronic device may stop driving the second fingerprint recognition mode to enter the recognizable state, for example, stop the initialization process of the second fingerprint recognition mode. Instead, the electronic device directly determines the verification result based on the first recognition result.

Alternatively, after determining that the second fingerprint recognition mode enters the fingerprint-recognizable state, the electronic device no longer verifies the input fingerprint in the second fingerprint recognition mode. Instead, the electronic device directly determines the verification result based on the previously determined first recognition result.

Alternatively, after the second fingerprint recognition mode enters the fingerprint-recognizable state, and the electronic device obtains the subsequent second recognition result determined in the second fingerprint recognition mode, the electronic device directly discards the second recognition result, and directly determines the verification result based on the first recognition result.

Alternatively, after the second fingerprint recognition mode enters the fingerprint-recognizable state, and the electronic device obtains the subsequent second recognition result determined in the second fingerprint recognition mode, the electronic device determines the verification result in a dual authentication manner based on the previously determined first recognition result and the subsequently determined second recognition result.

According to the first aspect or any implementation of the first aspect, the method further includes: storing the input fingerprint for recognition in the second fingerprint recognition mode; and after the second fingerprint recognition mode enters the fingerprint-recognizable state, verifying the input fingerprint in the second fingerprint recognition mode.

In this way, before the second fingerprint recognition mode enters the fingerprint-recognizable state, the electronic device first stores the input fingerprint, so that after the second fingerprint recognition mode subsequently enters the fingerprint-recognizable state, the electronic device can directly obtain the stored input fingerprint, to perform fingerprint verification in the second fingerprint recognition mode. In this way, the user does not need to input a fingerprint again, thereby reducing difficulty of a user operation and improving user experience.

According to the first aspect or any implementation of the first aspect, the verifying, in response to a received input fingerprint, the input fingerprint in a first fingerprint recognition mode and a second fingerprint recognition mode includes: after receiving the input fingerprint, determining that the second fingerprint recognition mode enters a fingerprint-recognizable state; and verifying the input fingerprint separately in the first fingerprint recognition mode and the second fingerprint recognition mode.

In some embodiments, the second fingerprint recognition mode may directly enter the fingerprint-recognizable state. For example, initialization does not need to be performed. In this case, after obtaining the input fingerprint, the electronic device may verify the input fingerprint in both the first fingerprint recognition mode and the second fingerprint recognition mode, thereby improving single-time fingerprint recognition efficiency and fingerprint recognition accuracy.

According to the first aspect or any implementation of the first aspect, fingerprint recognition accuracy of the second fingerprint recognition mode is higher than fingerprint recognition accuracy of the first fingerprint recognition mode.

In some embodiments, the first fingerprint recognition mode and the second fingerprint recognition mode are different. For example, the two fingerprint recognition modes provide different fingerprint recognition algorithms, software and hardware support manners, or covered fingerprint-recognizable scenarios.

According to the first aspect or any implementation of the first aspect, the electronic device is a smart door lock, and the determining, based on the verification result, whether to perform an operation on the electronic device includes: determining, based on the verification result, whether to perform an unlocking operation of the smart door lock.

In this way, in a fingerprint recognition scenario of the smart door lock, the smart door lock concurrently executes the first fingerprint recognition mode and the second fingerprint recognition mode, so that fingerprint recognition accuracy and fingerprint recognition efficiency are balanced, thereby improving user experience.

According to a second aspect, an electronic device is provided. The electronic device includes: a transceiver module and a processing module. The processing module includes a first fingerprint recognition module and a second fingerprint recognition module. The transceiver module is configured to receive an input fingerprint. The processing module is configured to: verify the input fingerprint by using the first fingerprint recognition module, to determine a first fingerprint recognition result; and verify the input fingerprint by using the second fingerprint recognition module, to determine a second fingerprint recognition result. The first fingerprint recognition module corresponds to a first fingerprint recognition mode, and the second fingerprint recognition module corresponds to a second fingerprint recognition mode. The processing module is further configured to obtain a verification result. The verification result is a result determined based on the first fingerprint recognition result and/or the second fingerprint recognition result, and the verification result indicates whether the input fingerprint is successfully verified. The processing module is further configured to determine, based on the verification result, whether to perform an operation on the electronic device.

According to the second aspect, the processing module is further configured to: when determining, in the first fingerprint recognition result or the second fingerprint recognition result, that a previously obtained fingerprint recognition result is that fingerprint recognition succeeds, directly determine that the obtained verification result indicates that the input fingerprint is successfully verified.

According to the second aspect or any implementation of the second aspect, the processing module is further configured to: discard a subsequently obtained fingerprint recognition result in the first fingerprint recognition result or the second fingerprint recognition result; or stop obtaining a subsequent fingerprint recognition result.

According to the second aspect or any implementation of the second aspect, the processing module is further configured to: when determining, in the first fingerprint recognition result or the second fingerprint recognition result, that a previously obtained fingerprint recognition result is that fingerprint recognition fails, determine the verification result based on a subsequently obtained fingerprint recognition result.

According to the second aspect or any implementation of the second aspect, the processing module is further configured to: when determining that the subsequently obtained fingerprint recognition result is that fingerprint recognition succeeds, determine that the obtained verification result indicates that the input fingerprint is successfully verified; or when determining that the subsequently obtained fingerprint recognition result is that fingerprint recognition fails, determine that the obtained verification result indicates that the input fingerprint fails to be verified.

According to the second aspect or any implementation of the second aspect, the processing module is further configured to: when determining that both the first fingerprint recognition result and the second fingerprint recognition result are that fingerprint recognition succeeds, determine that the verification result indicates that the input fingerprint is successfully verified; or when determining that either the first fingerprint recognition result or the second fingerprint recognition result is that fingerprint recognition fails, determine that the verification result indicates that the input fingerprint fails to be verified.

According to the second aspect or any implementation of the second aspect, the processing module is further configured to: by using the input fingerprint, update a first template fingerprint corresponding to the first fingerprint recognition mode, and/or update a second template fingerprint corresponding to the second fingerprint recognition mode.

According to the second aspect or any implementation of the second aspect, the processing module is further configured to: after the transceiver module receives the input fingerprint, determine that the second fingerprint recognition module does not enter a fingerprint-recognizable state; and verify the input fingerprint by using the first fingerprint recognition module.

According to the second aspect or any implementation of the second aspect, the processing module is further configured to store, by using the second fingerprint recognition module, the input fingerprint for recognition in the second fingerprint recognition mode. The processing module is further configured to: after the second fingerprint recognition mode enters the fingerprint-recognizable state, verify the input fingerprint in the second fingerprint recognition mode.

According to the second aspect or any implementation of the second aspect, the processing module is further configured to: after the transceiver module receives the input fingerprint, determine that the second fingerprint recognition module enters a fingerprint-recognizable state. The processing module is further configured to verify the input fingerprint separately by using the first fingerprint recognition module and the second fingerprint recognition module.

According to the second aspect or any implementation of the second aspect, fingerprint recognition accuracy of the second fingerprint recognition module is higher than fingerprint recognition accuracy of the first fingerprint recognition module.

According to the second aspect or any implementation of the second aspect, the electronic device is a smart door lock, and the electronic device further includes an unlocking module. The processing module is further configured to send an unlocking indication to the unlocking module after determining that the verification result indicates that the input fingerprint is successfully verified. The unlocking module is configured to receive the unlocking indication. The unlocking module is further configured to control the smart door lock to perform unlocking.

For technical effects corresponding to the second aspect and any implementation of the second aspect, refer to technical effects corresponding to the first aspect and any implementation of the first aspect. Details are not described herein again.

According to a third aspect, an electronic device is provided. The electronic device includes a processor and a memory. The memory is coupled to the processor, the memory is configured to store computer program code, and the computer program code includes computer instructions. When the processor reads the computer instructions from the memory, the electronic device performs the following operations: verifying, in response to a received input fingerprint, the input fingerprint in a first fingerprint recognition mode and a second fingerprint recognition mode; obtaining a verification result, where the verification result is a result determined based on a first fingerprint recognition result and/or a second fingerprint recognition result, the first fingerprint recognition result is a fingerprint recognition result determined in the first fingerprint recognition mode, the second fingerprint recognition result is a fingerprint recognition result determined in the second fingerprint recognition mode, and the verification result indicates whether the input fingerprint is successfully verified; and determining, based on the verification result, whether to perform an operation on the electronic device.

According to the third aspect, the obtaining a verification result includes: when determining, in the first fingerprint recognition result or the second fingerprint recognition result, that a previously obtained fingerprint recognition result is that fingerprint recognition succeeds, directly determining that the obtained verification result indicates that the input fingerprint is successfully verified.

According to the third aspect or any implementation of the third aspect, when the processor reads the computer-readable instructions from the memory, the electronic device is further enabled to perform the following operation: discarding a subsequently obtained fingerprint recognition result in the first fingerprint recognition result or the second fingerprint recognition result; or stopping obtaining a subsequent fingerprint recognition result.

According to the third aspect or any implementation of the third aspect, the obtaining a verification result includes: when determining, in the first fingerprint recognition result or the second fingerprint recognition result, that a previously obtained fingerprint recognition result is that fingerprint recognition fails, determining the verification result based on a subsequently obtained fingerprint recognition result.

According to the third aspect or any implementation of the third aspect, the determining the verification result based on a subsequently obtained fingerprint recognition result includes: when determining that the subsequently obtained fingerprint recognition result is that fingerprint recognition succeeds, determining that the obtained verification result indicates that the input fingerprint is successfully verified; or when determining that the subsequently obtained fingerprint recognition result is that fingerprint recognition fails, determining that the obtained verification result indicates that the input fingerprint fails to be verified.

According to the third aspect or any implementation of the third aspect, the obtaining a verification result includes: when determining that both the first fingerprint recognition result and the second fingerprint recognition result are that fingerprint recognition succeeds, determining that the verification result indicates that the input fingerprint is successfully verified; or when determining that either the first fingerprint recognition result or the second fingerprint recognition result is that fingerprint recognition fails, determining that the verification result indicates that the input fingerprint fails to be verified.

According to the third aspect or any implementation of the third aspect, when the verification result indicates that the input fingerprint is successfully verified, when the processor reads the computer-readable instructions from the memory, the electronic device is further enabled to perform the following operation: by using the input fingerprint, updating a first template fingerprint corresponding to the first fingerprint recognition mode, and/or updating a second template fingerprint corresponding to the second fingerprint recognition mode.

According to the third aspect or any implementation of the third aspect, the verifying, in response to a received input fingerprint, the input fingerprint in a first fingerprint recognition mode and a second fingerprint recognition mode includes: after receiving the input fingerprint, determining that the second fingerprint recognition mode does not enter a fingerprint-recognizable state; and verifying the input fingerprint in the first fingerprint recognition mode.

According to the third aspect or any implementation of the third aspect, when the processor reads the computer-readable instructions from the memory, the electronic device is further enabled to perform the following operations: storing the input fingerprint for recognition in the second fingerprint recognition mode; and after the second fingerprint recognition mode enters the fingerprint-recognizable state, verifying the input fingerprint in the second fingerprint recognition mode.

According to the third aspect or any implementation of the third aspect, the verifying, in response to a received input fingerprint, the input fingerprint in a first fingerprint recognition mode and a second fingerprint recognition mode includes: after receiving the input fingerprint, determining that the second fingerprint recognition mode enters a fingerprint-recognizable state; and verifying the input fingerprint separately in the first fingerprint recognition mode and the second fingerprint recognition mode.

According to the third aspect or any implementation of the third aspect, fingerprint recognition accuracy of the second fingerprint recognition mode is higher than fingerprint recognition accuracy of the first fingerprint recognition mode.

According to the third aspect or any implementation of the third aspect, the electronic device is a smart door lock, and the determining, based on the verification result, whether to perform an operation on the electronic device includes: determining, based on the verification result, whether to perform an unlocking operation of the smart door lock.

For technical effects corresponding to the third aspect and any implementation of the third aspect, refer to technical effects corresponding to the first aspect and any implementation of the first aspect. Details are not described herein again.

According to a fourth aspect, this application provides an electronic device. The electronic device has a function of implementing the fingerprint recognition method according to the first aspect and any possible implementation of the first aspect. The function may be implemented by hardware, or may be implemented by hardware executing corresponding software. The hardware or the software includes one or more modules corresponding to the function.

For technical effects corresponding to the fourth aspect and any implementation of the fourth aspect, refer to technical effects corresponding to the first aspect and any implementation of the first aspect. Details are not described herein again.

According to a fifth aspect, this application provides a computer-readable storage medium. The computer-readable storage medium stores a computer program (which may also be referred to as instructions or code). When the computer program is executed by an electronic device, the electronic device is enabled to perform the method according to the first aspect or any implementation of the first aspect.

For technical effects corresponding to the fifth aspect and any implementation of the fifth aspect, refer to technical effects corresponding to the first aspect and any implementation of the first aspect. Details are not described herein again.

According to a sixth aspect, this application provides a computer program product. When the computer program product runs on an electronic device, the electronic device is enabled to perform the method according to the first aspect or any implementation of the first aspect.

For technical effects corresponding to the sixth aspect and any implementation of the sixth aspect, refer to technical effects corresponding to the first aspect and any implementation of the first aspect. Details are not described herein again.

According to a seventh aspect, this application provides a circuit system. The circuit system includes a processing module, and the processing module is configured to perform the method according to the first aspect or any implementation of the first aspect.

For technical effects corresponding to the seventh aspect and any implementation of the seventh aspect, refer to technical effects corresponding to the first aspect and any implementation of the first aspect. Details are not described herein again.

According to an eighth aspect, this application provides a chip system, including at least one processor and at least one interface circuit. The at least one interface circuit is configured to: perform a transceiver function, and send instructions to the at least one processor. When the at least one processor executes the instructions, the at least one processor performs the method according to the first aspect or any implementation of the first aspect.

For technical effects corresponding to the eighth aspect and any implementation of the eighth aspect, refer to technical effects corresponding to the first aspect and any implementation of the first aspect. Details are not described herein again.

### BRIEF DESCRIPTION OF DRAWINGS

FIG. 1 is a schematic flowchart 1 of a fingerprint recognition method according to an embodiment of this application;
FIG. 2 is a schematic flowchart 2 of a fingerprint recognition method according to an embodiment of this application;
FIG. 3 is a diagram of a form of an electronic device according to an embodiment of this application;
FIG. 4 is a diagram of a hardware structure of an electronic device according to an embodiment of this application;
FIG. 5 is a diagram of a software architecture of an electronic device according to an embodiment of this application;
FIG. 6 is a schematic flowchart 3 of a fingerprint recognition method according to an embodiment of this application;
FIG. 7 is a diagram of module interaction according to an embodiment of this application;
FIG. 8 is a schematic flowchart 4 of a fingerprint recognition method according to an embodiment of this application;
FIG. 9(a), FIG. 9(b), and FIG. 9(c) are a diagram of interfaces according to an embodiment of this application;
FIG. 10 is a schematic flowchart 5 of a fingerprint recognition method according to an embodiment of this application; and
FIG. 11 is a diagram of a structure of an electronic device according to an embodiment of this application.

### DESCRIPTION OF EMBODIMENTS

The following describes the technical solutions in embodiments of this application with reference to the accompanying drawings in embodiments of this application. In descriptions of embodiments of this application, terms used in the following embodiments are merely intended to describe specific embodiments, but are not intended to limit this application. The terms "one", "a", "the", "the foregoing", "this", and "the one" of singular forms used in this specification and the appended claims of this application are intended to include expressions such as "one or more", unless otherwise specified in the context clearly. It should be further understood that, in the following embodiments of this application, "at least one" and "one or more" mean one or more than two (including two).

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner. The term "connection" includes a direct connection and an indirect connection, unless otherwise specified. "First" and "second" are merely intended for description, and shall not be understood as an indication or implication of relative importance or implicit indication of a quantity of indicated technical features.

In embodiments of this application, the word such as "example" or "for example" indicate giving an example, an illustration, or a description. Any embodiment or design solution described by "example" or "for example" in embodiments of this application should not be construed as being more preferred or having more advantages than another embodiment or design solution. To be specific, use of the word such as "example" or "for example" is intended to present a related concept in a specific manner.

In some scenarios, an electronic device has a fingerprint recognition function. The electronic device receives a fingerprint input by a user and calculating a matching degree between the input fingerprint and a template fingerprint stored in a memory of the electronic device, to determine whether the input fingerprint is a valid fingerprint. If the fingerprint is valid, a function is allowed to be performed; or if the fingerprint is invalid, a function is not allowed to be performed. The template fingerprint is a person's fingerprint that allows fingerprint unlocking and that is recorded by the user into the electronic device in advance.

It should be noted that the electronic device includes but is not limited to a smart door lock. Any device that determines, through fingerprint recognition, whether to perform a function may be the foregoing electronic device.

In some embodiments, a fingerprint recognition mode of the electronic device may include a fingerprint recognition mode with low fingerprint recognition accuracy, for example, a match on chip (match on chip, MOC) mode, that is, a fingerprint recognition mode in which fingerprint recognition is performed inside a fingerprint assembly.

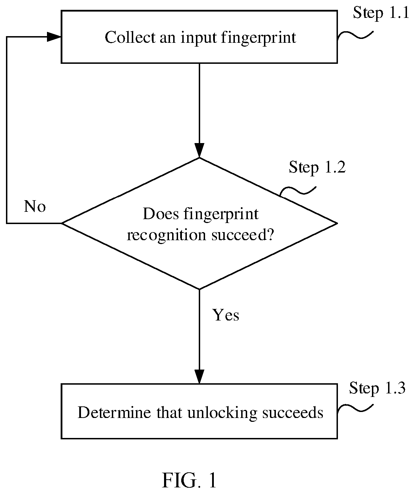

For example, as shown in FIG. 1, in a MOC mode-based fingerprint recognition scheme, after collecting the input fingerprint by using a fingerprint sensor in the fingerprint assembly, the electronic device performs fingerprint recognition by using a fingerprint processing module in the fingerprint assembly, for example, matches the input fingerprint with the pre-stored template fingerprint, and confirms a matching result (that is, step 1.1 and step 1.2). If the matching succeeds, a microcontroller unit (microcontroller unit, MCU) may be notified to start a motor driver and perform unlocking (for example, release locking). That is, the electronic device determines that the unlocking succeeds (that is, step 1.3). If the matching fails, the electronic device prompts the user that fingerprint recognition fails this time and a fingerprint needs to be re-input, that is, return to perform step 1.1.

It can be learned that in the foregoing MOC mode-based fingerprint recognition scheme, the electronic device implements fingerprint recognition through a computing capability of the fingerprint assembly. However, generally, the computing capability of the fingerprint assembly is limited, and cannot perform accurate recognition in some scenarios. For example, in a scenario in which a fingerprint of a person is unclear due to a wet or dirty hand or the like, a fingerprint of an elderly person may fade due to aging, or a fingerprint of a child is not clear enough or is excessively small due to ongoing growth, the fingerprint assembly may encounter an error in the fingerprint recognition process, leading to an unlocking failure. That is, fingerprint recognition accuracy is not high. In this case, the user may need to repeatedly input a fingerprint a plurality of times, which affects user experience.

In some other embodiments, the fingerprint recognition mode of the electronic device may further include a fingerprint recognition mode with high fingerprint recognition accuracy, for example, a match on host (match on host, MOH) mode, that is, a fingerprint recognition mode in which fingerprint recognition is performed on a main control chip side.

For example, a fingerprint artificial intelligence (artificial intelligence, AI) processing module with high accuracy may be disposed, to improve the fingerprint recognition accuracy. However, after the fingerprint AI processing module is started, an initialization process needs to be first performed to load a high-accuracy fingerprint recognition algorithm and a template fingerprint, leading to a long waiting time for fingerprint recognition.

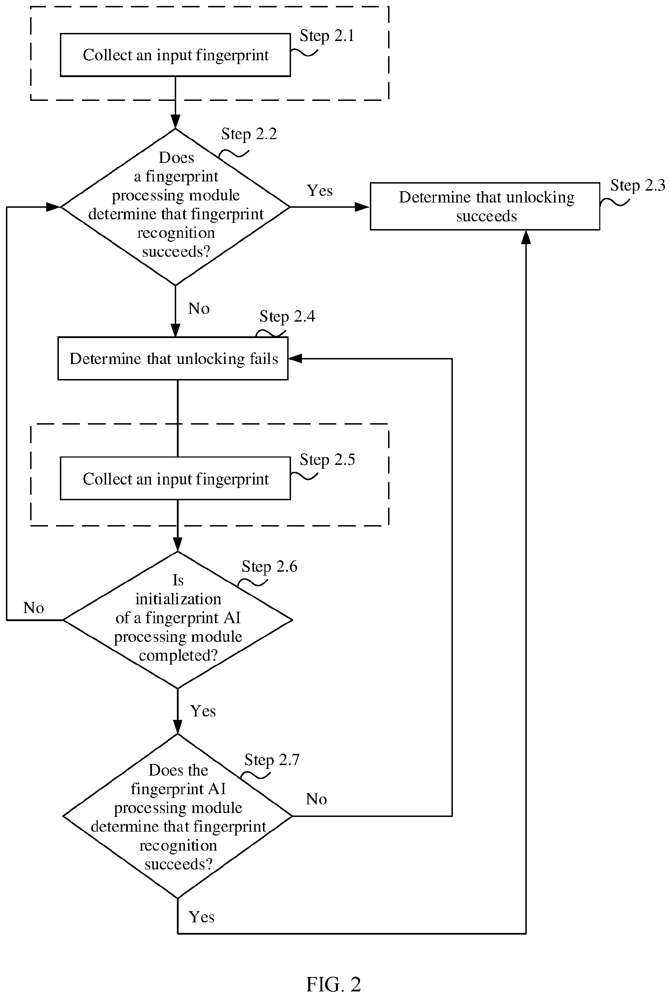

In this case, as shown in FIG. 2, after collecting the input fingerprint by using the fingerprint sensor in the fingerprint assembly, the electronic device may select a fingerprint recognition mode that has entered a fingerprint-recognizable state for fingerprint recognition. For example, the MOC mode that does not need to wait for initialization is selected to perform fingerprint recognition. In this case, the electronic device may perform fingerprint recognition by using the fingerprint processing module in the fingerprint assembly (that is, step 2.1 and step 2.2). If the fingerprint recognition succeeds, the electronic device may determine that the unlocking succeeds (that is, step 2.3). If the fingerprint recognition fails, the electronic device may prompt the user that the fingerprint recognition fails this time, to re-collect an input fingerprint of the user (that is, step 2.4 and step 2.5). Then, the electronic device may further select a currently available fingerprint recognition mode in response to the received input fingerprint. For example, the electronic device determines whether the fingerprint AI processing module has completed initialization (that is, whether the fingerprint-recognizable state has been entered). If the initialization has not been completed, the electronic device may select the MOC mode again for fingerprint recognition, and perform fingerprint recognition by using the fingerprint processing module in the fingerprint assembly (that is, return to step 2.2 from step 2.6). If the initialization has been completed, the electronic device may select fingerprint recognition in the MOH mode, and perform fingerprint recognition by using the fingerprint AI processing module (that is, step 2.6 and step 2.7). If determining, by using the fingerprint AI processing module, that the fingerprint recognition succeeds, the electronic device may determine that the unlocking succeeds (that is, return to step 2.3). If determining, by using the fingerprint AI processing module, that the fingerprint recognition fails, the electronic device may prompt the user that the fingerprint recognition fails this time, to re-collect an input fingerprint of the user (that is, return to step 2.4 and step 2.5). It can be learned that in the foregoing MOH mode-based fingerprint recognition scheme, each time after the input fingerprint of the user is collected, the electronic device can select only one fingerprint recognition mode between a fingerprint recognition mode of the MOC mode and a fingerprint recognition mode of the MOH mode based on an initialization completion status of the fingerprint AI processing module, to verify a currently obtained input fingerprint. In this case, the user may need to input a fingerprint a plurality of times to implement unlocking, which affects user experience.

In addition, the fingerprint AI processing module has an AI learning capability, and can update the stored template fingerprint based on an obtained input fingerprint. However, in the foregoing scenario, generally, the electronic device may complete an unlocking process through fingerprint recognition in the MOC mode. In this case, because the fingerprint AI processing module cannot obtain the input fingerprint, the stored template fingerprint cannot be updated, and subsequent fingerprint recognition of the fingerprint AI processing module is affected.

For example, the fingerprint AI processing module obtains a template fingerprint recorded by a child. Because the child is still growing, the fingerprint may change due to ongoing growth of the child. Within a period of time after the template fingerprint is recorded, the electronic device may perform unlocking in response to a fingerprint input operation of the child in the MOC mode. In this case, the fingerprint AI processing module cannot update the stored template fingerprint of the child. Subsequently, for example, in some special scenarios such as a wet hand or a dirty hand, the electronic device determines, in response to a fingerprint input operation of the child, that fingerprint recognition needs to be performed by using the fingerprint AI processing module. Because the fingerprint AI processing module does not update the template fingerprint for a long time, an old template fingerprint may be different from a current fingerprint of the child, which may result in a slow unlocking speed and a reduced success rate, and affect user experience.

Therefore, an embodiment of this application provides a fingerprint recognition method. The electronic device concurrently triggers fingerprint recognition in a first fingerprint recognition mode and fingerprint recognition in a second fingerprint recognition mode in response to a received input fingerprint. Fingerprint recognition accuracy of the second fingerprint recognition mode is higher than fingerprint recognition accuracy of the first fingerprint recognition mode. In this way, fingerprint recognition accuracy and fingerprint recognition efficiency of the electronic device can be balanced, thereby improving user experience.

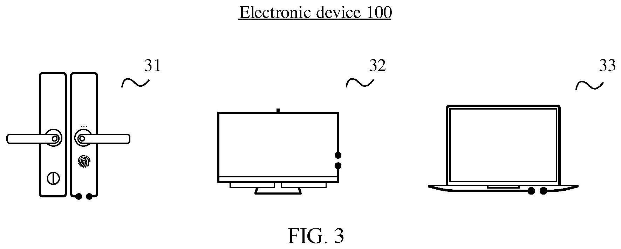

Optionally, the fingerprint recognition method provided in this embodiment of this application may be applied to an electronic device 100. For example, as shown in FIG. 3, the electronic device 100 includes but is not limited to an electronic device having a fingerprint recognition function, such as a smart home device (such as a smart door lock 31 or a smart television 32), a notebook computer 33, a laptop computer (Laptop), or a computing device. The electronic device 100 may be installed with an operating system. The operating system installed on the electronic device 100 includes but is not limited to iOS^{®}, Android^{®}, Harmony^{®}, Windows^{®}, Linux^{®}, or another operating system. Alternatively, the electronic device 100 may not be installed with an operating system. A specific type of the electronic device 100, whether an operating system is installed, and a type of an operating system when the operating system is installed are not limited in this application.

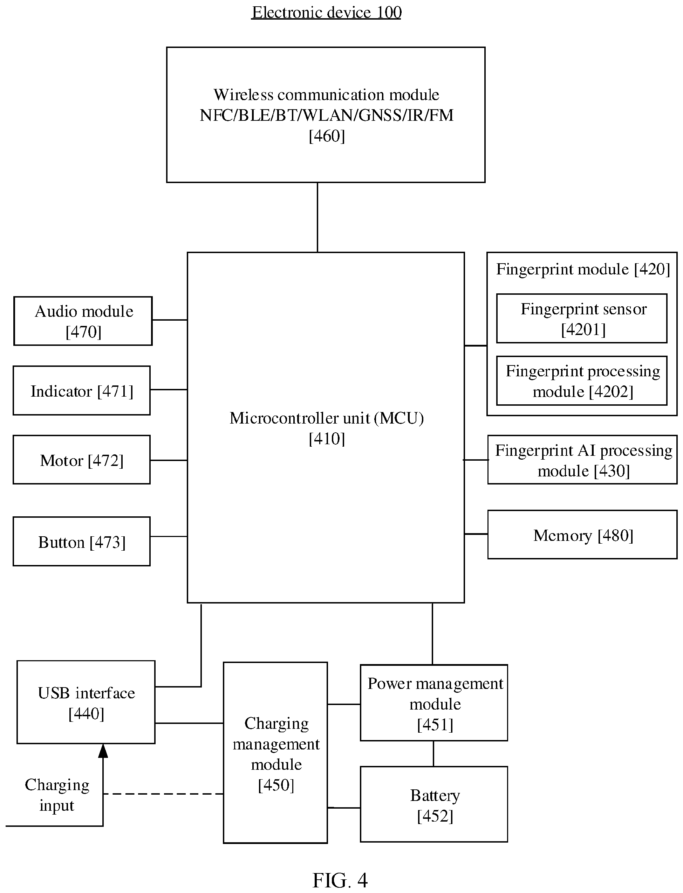

For example, FIG. 4 is a diagram of a hardware structure of the electronic device 100. As shown in FIG. 4, the electronic device 100 may include, for example, a microcontroller unit (MCU) 410, a fingerprint assembly 420, a fingerprint AI processing module 430, a universal serial bus (universal serial bus, USB) interface 440, a charging management module 450, a power management module 451, a battery 452, a wireless communication module 460, an audio module 470, an indicator 471, a motor 472, a button 473, and a memory 480.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware. For example, the electronic device 100 may further include a display, and the display displays a password input interface, which is configured to receive a password input by a user, to implement password unlocking.

The MCU 410, also described as a main control MCU, is configured to implement an electronic device control function. For example, the MCU 410 may receive fingerprint recognition results sent by the fingerprint assembly 420 and the fingerprint AI processing module 430, and determine, based on the fingerprint recognition results, whether to perform unlocking. If a previously received fingerprint recognition result is that fingerprint recognition succeeds, the MCU 410 may determine to perform unlocking. If the previously received fingerprint recognition result is that the fingerprint recognition fails, whether to perform unlocking may be determined based on a subsequently received fingerprint recognition result.

The fingerprint assembly 420 is configured to detect a fingerprint input by the user, and recognize the input fingerprint. In some embodiments, the fingerprint assembly 420 includes a fingerprint sensor 4201 and a fingerprint processing module 4202. The fingerprint processing module 4202 may include a fingerprint processing chip. The fingerprint sensor 4201 is configured to collect an input fingerprint of the user. In some embodiments, the fingerprint processing module 4202 may be configured to support fingerprint recognition of the electronic device 100 in a MOC mode. The fingerprint processing module 4202 is configured with a fingerprint recognition algorithm, which is used to verify a user fingerprint collected by the fingerprint sensor 4201, to confirm whether the user fingerprint is a valid fingerprint.

The fingerprint AI processing module 420 is configured with a fingerprint recognition algorithm, which is used to verify a received fingerprint, to determine whether the received fingerprint is a valid fingerprint. The fingerprint AI processing module 420 may include a fingerprint AI processing chip. In an implementation, the fingerprint AI processing module 430 is the fingerprint AI processing chip. In some embodiments, the fingerprint AI processing module 420 is configured to support fingerprint recognition of the electronic device 100 in a MOH mode. The fingerprint AI processing module 430 receives an input fingerprint of the user collected by the fingerprint assembly 420, and compares the user fingerprint with a securely stored template fingerprint for verification, to determine whether the input fingerprint is a valid fingerprint. For a fingerprint recognition algorithm configured in the fingerprint AI processing module 430, refer to fingerprint recognition algorithms in this field. This is not specifically limited in this embodiment of this application.

The USB interface 440 is an interface that conforms to a USB standard specification, and may be specifically a mini USB interface, a micro USB interface, a USB type-C interface, or the like. The USB interface 440 may be configured to connect to a charger to charge the electronic device 100, or may be configured to transmit data between the electronic device 100 and a peripheral device.

The charging management module 450 is configured to receive a charging input from the charger. In some embodiments, the charging management module 450 may receive a charging input of a wired charger through the USB interface 440. The charging management module 450 may further supply power to the electronic device 100 by using the power management module 451 while charging the battery 452.

The power management module 451 is configured to connect to the battery 452, the charging management module 450, and the MCU 410. The power management module 451 receives an input from the battery 452 and/or the charging management module 450, and supplies power to the MCU 410, the fingerprint assembly 420, the fingerprint AI processing module 430, the memory 480, the wireless communication module 460, and the like.

In some embodiments, the power management module 451 and the charging management module 450 may be alternatively disposed in a same device.

The wireless communication module 460 may provide a wireless communication solution that is applied to the electronic device 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 460 may be one or more components that integrate at least one communication processing module. The wireless communication module 460 receives an electromagnetic wave through an antenna, performs frequency modulation and filtering processing on the electromagnetic wave signal, and sends a processed signal to the MCU 410. The wireless communication module 460 may further receive a to-be-sent signal from the MCU 410, perform frequency modulation and amplification on the signal, and convert the signal into an electromagnetic wave for radiation through the antenna.

The audio module 470 is configured to convert digital audio information into an analog audio signal output, and also configured to convert an analog audio input into a digital audio signal. The audio module 470 may be further configured to encode and decode an audio signal. In some embodiments, the audio module 470 may be disposed in the MCU 410, or some functional modules in the audio module 470 are disposed in the MCU 410.

In some embodiments, the audio module 470 may include modules such as a speaker (speaker), a receiver, and a microphone, which are configured to implement a voice function of the electronic device 100. For example, after detecting that the user is approaching, the electronic device 100 provides the user with a voice prompt that the user may implement fingerprint unlocking by inputting a fingerprint. For another example, the electronic device 100 determines that the user fingerprint is successfully verified, and after unlocking, the electronic device 100 provides the user with a voice prompt that unlocking has been performed.

The indicator 471 may be an indicator light, and may be configured to indicate a charging status and a change of a remaining battery level, and may also be configured to indicate an unlocking status, or the like.

The motor 472 is configured to retract or extend a deadbolt, to implement unlocking or locking control. In some embodiments, the electronic device 100 drives the motor 472 to perform unlocking. For example, when the electronic device 100 is a smart door lock, the electronic device 100 may drive the motor 472 to perform unlocking.

The button 473 includes a power button, a volume button, and the like. The button 473 may be a mechanical button, or may be a touch button. The electronic device 100 may receive a button input, and generate a button signal input related to user setting and function control of the electronic device 100.

The memory 480 may be configured to store computer-executable program code. The executable program code includes instructions. The internal memory 480 may include a program storage area and a data storage area. The program storage area may store an operating system, an application program required by at least one function (such as a fingerprint control service function and a door locking/unlocking service logic function), and the like. The data storage area may store data (for example, template fingerprint data) created during use of the electronic device 100, and the like. In addition, the memory 480 may include a high-speed random access memory, or may further include a non-volatile memory, for example, at least one magnetic disk storage device, a flash memory device, or universal flash storage (universal flash storage, UFS). The MCU 410 runs the instructions stored in the memory 480 and/or the instructions stored in the memory disposed in the MCU 410, to perform various function applications of the electronic device 100 and data processing.

A software system of the electronic device 100 may use a layered architecture, an event-driven architecture, a microkernel architecture, a micro service architecture, or a cloud architecture. In embodiments of this application, a layered architecture is used as an example to describe a software structure of the electronic device 100.

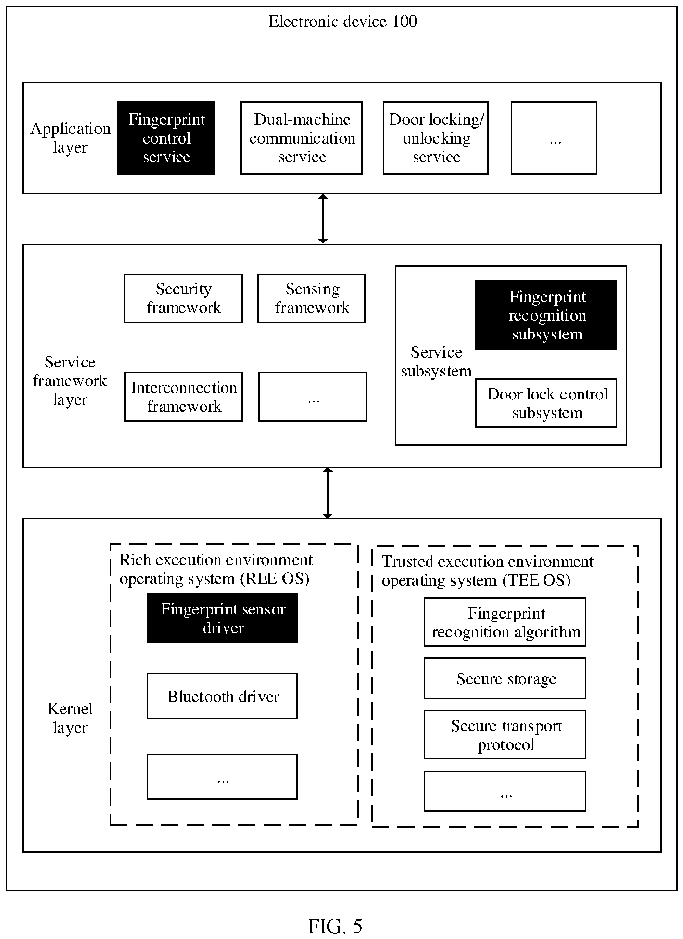

For example, FIG. 5 is a block diagram of a software structure of an electronic device 100 according to an embodiment of this application. In a layered architecture, software is divided into several layers, and each layer has a clear role and task. The layers communicate with each other through a software interface. In some embodiments, the software system is divided into three layers: an application layer, a service framework layer, and a kernel layer from top to bottom.

The application layer may include a series of application service packages supported by the electronic device 100. As shown in FIG. 5, the application layer may include a fingerprint control service, a dual-machine communication service, a door locking/unlocking service, and the like.

In some embodiments, the fingerprint control service is used to control fingerprint recognition service logic of the electronic device 100, including recording, deletion, and the like of a fingerprint.

The dual-machine communication service is used for information transmission between different chips and modules, for example, instruction transmission between an MCU and a fingerprint AI processing module.

The door locking/unlocking service is used to control, based on a fingerprint recognition result, retraction or extension of deadbolt, to perform locking/unlocking of a door lock.

The service framework layer provides an application programming interface (application programming interface, API) and a programming framework for a service at the application layer. The service framework layer includes some predefined functions.

As shown in FIG. 5, the service framework layer may include a security framework, a sensing framework, an interconnection framework, a service subsystem, and the like. The service subsystem may include a fingerprint recognition subsystem and a door lock control subsystem.

The security framework is used for encryption and decryption processing, secure storage of fingerprint data, and secure transmission of a fingerprint recognition result. The electronic device 100 ensures security of a fingerprint recognition process by using the security framework.

The sensing framework is used to provide a unified sensor control interface for a service at the application layer. For example, the sensing framework provides a control interface for a fingerprint sensor.

The interconnection framework provides a unified interconnection control interface and processing logic for a service at the application layer. For example, the interconnection framework provides a control interface and processing logic for a service with a function such as Bluetooth (Bluetooth, BT) (for example, conventional Bluetooth or Bluetooth low energy (Bluetooth low energy, BLE)), wireless fidelity (wireless fidelity, Wi-Fi), and near-field communication (near field communication, NFC).

The service subsystem is used to support the electronic device 100 in completing fingerprint recognition and door lock control in a fingerprint recognition process. The fingerprint recognition subsystem is used to manage fingerprint recognition modes and control data paths for fingerprint recognition in different fingerprint recognition modes. For example, the fingerprint recognition subsystem is used to control a data path in a fingerprint recognition process of a fingerprint processing module, and is used to control a data path in a fingerprint recognition process of a fingerprint AI module. The door lock control subsystem is used to control locking/unlocking of a door lock.

The kernel layer is a layer between hardware and software. A kernel layer execution environment includes a rich execution environment (rich execution environment, REE) and trusted execution environment (trusted execution environment, TEE). The REE, also referred to as a normal execution environment, includes a rich execution environment operating system (rich execution environment operating system, REE OS) running on a general-purpose processor, and supports running of a client application (client application, CA) in the application layer. The TEE, also referred to as a secure execution environment, may run a trusted execution environment operating system (trusted execution environment operating system, TEE OS) to provide a trusted security service (for example, a fingerprint comparison service) for the CA. Such security services may run on the TEE OS in a form of trusted application (trusted application, TA).

For example, as shown in FIG. 5, the REE OS supports running of a fingerprint sensor driver, a Bluetooth driver, and the like. The fingerprint sensor driver is used to start the fingerprint sensor to collect an input fingerprint of the user. The TEE OS is used to provide a secure running environment for fingerprint verification of the fingerprint AI processing module, a secure storage environment for a template fingerprint, and a secure transmission environment for an input fingerprint and a fingerprint recognition result.

The following describes in detail the fingerprint recognition method provided in this embodiment of this application by using an example in which the electronic device 100 is a smart door lock and the fingerprint recognition mode includes a MOC mode and a MOH mode.

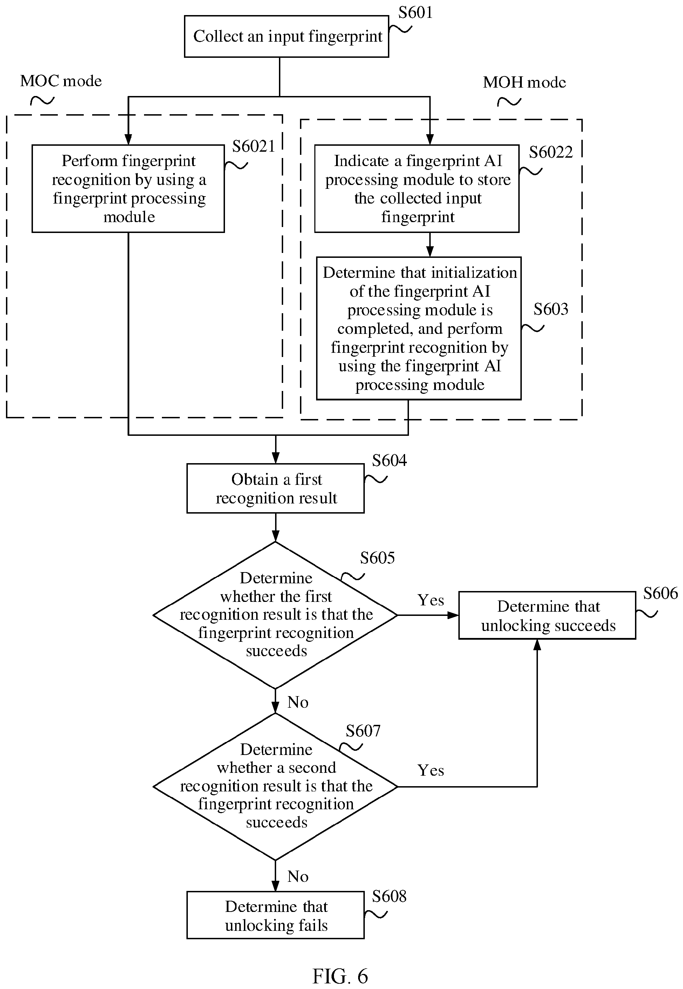

For example, FIG. 6 is a schematic flowchart of a fingerprint recognition method according to an embodiment of this application. As shown in FIG. 6, the method may include the following steps.

S601: A smart door lock collects an input fingerprint.

In some embodiments, if the smart door lock does not detect an operation of a user within a preset time period, the smart door lock may enter a sleep state, and make a module in the smart door lock power off or sleep. After detecting a wake-up signal, the smart door lock disables the sleep state and wakes up an MCU to execute a current unlocking task.

In some embodiments, the wake-up signal may be a command automatically detected by the smart door lock. Alternatively, after detecting an operation performed by the user on the smart door lock, the smart door lock uses a command corresponding to the operation as the wake-up signal.

For example, the smart door lock is provided with a passive infrared (passive infrared, PIR) sensor. The smart door lock detects infrared radiation by using the PIR sensor. If the detected infrared radiation is higher than a preset threshold, the smart door lock may determine that the user approaches the smart door lock and the user may currently need to unlock the door lock, and automatically wake up the MCU.

For another example, the smart door lock is provided with a PIR sensor and a time of flight (time of flight, TOF) sensor. The smart door lock detects infrared radiation by using the PIR sensor. If the detected infrared radiation is higher than a preset threshold, the smart door lock may determine that a human body is detected. Then, the smart door lock detects a distance between the human body and the smart door lock by using the TOF sensor. If the detected distance is less than or equal to a preset distance threshold, the smart door lock may determine that the user may need to unlock the door lock, and automatically wake up the MCU.

For still another example, the smart door lock detects an operation performed by the user on a button, and determines that the user may need to operate the door lock (for example, unlock the door lock). In this case, the smart door lock wakes up the MCU. The key may be a mechanical button, or may be a touch key displayed on a display.

In some embodiments, after receiving the wake-up signal, the smart door lock may further prompt, in a preset manner, the user to unlock the smart door lock by inputting a fingerprint. The preset manner includes, for example, one or more manners of a voice prompt, displaying prompt information on the display, and an indicator prompt.

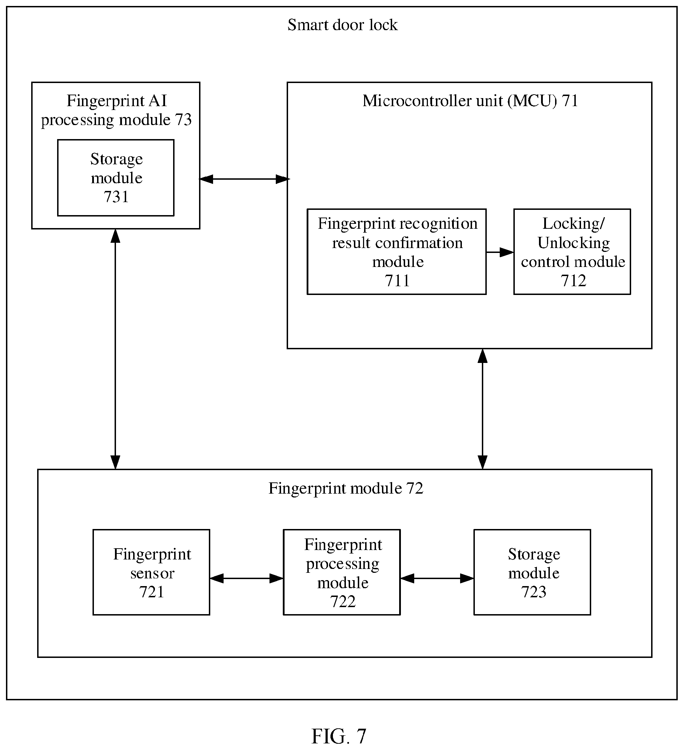

For example, as shown in FIG. 7, the smart door lock wakes up an MCU 71 in response to a detected user. After being woken up, the MCU 71 sends a wake-up signal to a fingerprint assembly 72, to indicate the fingerprint assembly 72 to detect, by using a fingerprint sensor 721, a fingerprint input by the user. After being started in response to the wake-up signal, the fingerprint assembly 72 starts the fingerprint sensor 721 to collect the fingerprint input by the user.

In some embodiments, the smart door lock may mistakenly detect the wake-up signal and wake up the MCU. In this case, if the smart door lock does not collect an input fingerprint within a preset detection time, the smart door lock may enter the sleep state again, and wait for a next wake-up.

For example, the user passes by the smart door lock, and a distance between the user and the smart door lock is so short that the door lock detects that the infrared radiation is higher than the preset threshold. In this case, the smart door lock determines to wake up the MCU. At this time, obviously, the smart door lock does not collect the input fingerprint, and automatically enters the sleep state after the preset detection time.

S6021: The smart door lock performs fingerprint recognition by using a fingerprint processing module.

S6022: The smart door lock indicates a fingerprint AI processing module to store the collected input fingerprint.

In some embodiments, the smart door lock concurrently performs step S6021 and step S6022. In other words, after determining that the input fingerprint is collected, the smart door lock may concurrently perform fingerprint recognition in a MOC mode and a MOH mode.

For example, as shown in FIG. 7, after collecting the input fingerprint by using the fingerprint sensor 721, the fingerprint assembly 72 in the smart door lock may send the collected input fingerprint to a fingerprint processing module 722 for fingerprint recognition, that is, MOC mode-based fingerprint recognition. After receiving the input fingerprint, the fingerprint processing module 722 may request to obtain a first template fingerprint from a storage module 723. Then, the fingerprint processing module 722 matches the input fingerprint with the first template fingerprint, and generates a fingerprint recognition result based on a matching degree. The first template fingerprint is a template fingerprint determined and stored by the fingerprint assembly 72. For a process of determining the template fingerprint, refer to the conventional technology. This is not limited in this embodiment of this application.

As shown in FIG. 7, in a process in which the fingerprint assembly 72 in the smart door lock sends the collected input fingerprint to the fingerprint processing module 722 after collecting the input fingerprint by using the fingerprint sensor 721, the fingerprint assembly 72 may also send the collected input fingerprint to a fingerprint AI processing module 73. For example, the fingerprint assembly 72 sends the input fingerprint to the fingerprint AI processing module 73 through a serial peripheral interface (serial peripheral interface, SPI) for MOH mode-based fingerprint recognition.

Optionally, after the smart door lock wakes up the MCU 71, the MCU 71 may send the wake-up signal to the fingerprint AI processing module 73, to start the fingerprint AI processing module 73. Alternatively, the fingerprint AI processing module 73 is started after receiving the input fingerprint sent by the fingerprint assembly 72. Optionally, a process of starting the fingerprint AI processing module 73 may be a re-powering process. After the fingerprint AI processing module 73 is re-powered, initialization needs to be performed first. In an initialization process, the fingerprint AI processing module 73 has not entered a fingerprint-recognizable state, and can enter the fingerprint-recognizable state only after initialization is completed, to perform fingerprint recognition. In the initialization process, a fingerprint recognition algorithm and a second template fingerprint are loaded.

The initialization process of the fingerprint AI processing module 73 requires a specific period of time. Therefore, after receiving the input fingerprint sent by the fingerprint assembly 72, if determining that the initialization has not been completed, the fingerprint AI processing module 73 may first store the input fingerprint by using the storage module 731, to subsequently perform fingerprint recognition after initialization is completed.

It should be noted that the initialization process of the fingerprint AI processing module may further include initialization of another parameter or service. For example, the fingerprint AI processing module initializes a CA and a TA, to subsequently perform fingerprint recognition in a trusted execution environment. The initialization process of the fingerprint AI processing module is not limited in this embodiment of this application.

S603: The smart door lock determines that initialization of the fingerprint AI processing module is completed, and performs fingerprint recognition by using the fingerprint AI processing module.

In some embodiments, after determining that the initialization of the fingerprint AI processing module is completed, the smart door lock may perform MOH mode-based fingerprint recognition.

For example, as shown in FIG. 7, after completing initialization, the fingerprint AI processing module 73 obtains the second template fingerprint stored in the storage module 731. Further, the fingerprint AI processing module 73 may further obtain the input fingerprint stored in the storage module 731. Then, the fingerprint AI processing module 73 matches the input fingerprint with the second template fingerprint, and generates a fingerprint recognition result based on a matching degree. The second template fingerprint is a template fingerprint determined and stored by the fingerprint AI processing module 73. For a process of determining the template fingerprint, refer to the conventional technology. This is not limited in this embodiment of this application.

In some examples, the fingerprint AI processing module includes a fingerprint AI processing chip, or the fingerprint AI processing module is a fingerprint AI processing chip, and the fingerprint AI processing chip may perform high-accuracy fingerprint recognition. Therefore, in a scenario in which a fingerprint of a person is unclear due to a wet or dirty hand or the like, a fingerprint of an elderly person may fade due to aging, or a fingerprint of a child is not clear enough or is excessively small due to ongoing growth, the fingerprint AI processing chip can perform AI image processing on the input fingerprint, to improve a success rate of fingerprint recognition.

It should be noted that, in a fingerprint recognition process, the fingerprint processing module or the fingerprint AI processing module performs image analysis and comparison based on a collected fingerprint image (that is, the input fingerprint) and a corresponding template fingerprint, to verify whether the input fingerprint is a valid fingerprint. For a specific fingerprint recognition process, refer to the conventional technology. Details are not described in this embodiment of this application.

S604: The smart door lock obtains a first recognition result.

The first recognition result is a fingerprint recognition result previously determined by the smart door lock.

In some embodiments, the smart door lock performs the fingerprint recognition process separately by using the fingerprint AI processing module and the fingerprint processing module in the fingerprint assembly, and a time at which the fingerprint AI processing module outputs a fingerprint recognition result may be different from a time at which the fingerprint processing module outputs a fingerprint recognition result. In this case, the smart door lock may first determine a fingerprint recognition result, and the fingerprint recognition result is the first recognition result. The first recognition result may be a fingerprint recognition result determined by the fingerprint processing module in the fingerprint assembly in the MOC mode, or may be a fingerprint recognition result determined by the fingerprint AI processing module in the MOH mode.

For example, as shown in FIG. 7, after completing fingerprint recognition by using the fingerprint processing module 722, the fingerprint assembly 72 generates a fingerprint recognition result, and sends the fingerprint recognition result to the MCU 71. For example, the fingerprint assembly 72 sends the fingerprint recognition result to the MCU 71 through an inter-integrated circuit (inter-integrated circuit, I2C) interface.

As shown in FIG. 7, after completing fingerprint recognition, the fingerprint AI processing module 73 generates a fingerprint recognition result, and sends the fingerprint recognition result to the MCU 71. For example, the fingerprint AI processing module 73 sends the fingerprint recognition result to the MCU 71 through the SPI interface.

Correspondingly, the MCU 71 receives fingerprint recognition results sent by the fingerprint assembly 72 and the fingerprint AI processing module 73. Then, the MCU 71 determines the previously received first recognition result by using a fingerprint recognition result confirmation module 711. The first recognition result may be the fingerprint recognition result sent by the fingerprint assembly 72, or may be the fingerprint recognition result sent by the fingerprint AI processing module 73.

It may be understood that communication interfaces between the modules shown in FIG. 7 may be alternatively other interfaces, for example, a universal asynchronous receiver/transmitter (universal asynchronous receiver/transmitter, UART) interface.

S605: The smart door lock determines whether the first recognition result is that the fingerprint recognition succeeds. If the first recognition result is that the fingerprint recognition succeeds, step S606 is performed; or if the first recognition result is not that the fingerprint recognition succeeds, step S607 is performed.

In some embodiments, after receiving the first recognition result, the smart door lock determines, based on the first recognition result, whether the fingerprint recognition succeeds. If the fingerprint recognition succeeds, that is, it is determined that the input fingerprint is successfully verified, the smart door lock may determine to perform unlocking (that is, perform the following step S606). In addition, the smart door lock may discard a subsequently received second recognition result. If the fingerprint recognition fails, that is, it is determined that the input fingerprint fails to be verified, the smart door lock may wait to receive the second recognition result, and determine, based on the second recognition result, whether to perform unlocking (that is, perform the following step S607).

For example, as shown in FIG. 7, the MCU 71 in the smart door lock determines, by using the fingerprint recognition result confirmation module 711, whether the first recognition result indicates that the fingerprint recognition succeeds. If determining that the first recognition result indicates that the fingerprint recognition succeeds, the smart door lock may send an indication signal to a locking/unlocking control module 712, to indicate the locking/unlocking control module 712 to perform unlocking. If determining that the first recognition result indicates that the fingerprint recognition fails, the smart door lock may further confirm the second recognition result.

Optionally, in a process of confirming the first recognition result, the fingerprint recognition result confirmation module 711 is further waiting to receive the second recognition result.

The fingerprint recognition result confirmation module 711 determines that the first recognition result is that the fingerprint recognition succeeds. Then, if the second recognition result has been received, the fingerprint recognition result confirmation module 711 may discard the second recognition result; or if the second recognition result has not been received temporarily, the fingerprint recognition result confirmation module 711 may discard the second recognition result after subsequently receiving the second recognition result. Alternatively, if the second recognition result has not been received temporarily, the fingerprint recognition result confirmation module 711 may indicate a module (for example, the fingerprint AI processing module 73 or the fingerprint assembly 72) that has not sent a fingerprint recognition result to stop confirming the fingerprint recognition result. That is, after determining, based on the first recognition result, that the fingerprint recognition succeeds and determining that the unlocking succeeds, the smart door lock may stop obtaining the second recognition result, to save computing resources.

The fingerprint recognition result confirmation module 711 determines that the first recognition result is that the fingerprint recognition fails. Then, if the second recognition result has been received, the fingerprint recognition result confirmation module 711 may confirm the second recognition result; or if the second recognition result has not been received temporarily, the fingerprint recognition result confirmation module 711 may confirm the second recognition result after subsequently receiving the second recognition result.

S606: The smart door lock determines that the unlocking succeeds.

In some embodiments, the smart door lock determines that the fingerprint recognition succeeds, confirms that the current user is a secure user, drives a motor to unlock the door lock, and allows the user to enter.

For example, as shown in FIG. 7, after the MCU 71 in the smart door lock determines, by using the fingerprint recognition result confirmation module 711, that the fingerprint recognition succeeds, the fingerprint recognition result confirmation module 711 may send an unlocking confirmation signal to the locking/unlocking control module 712. After receiving the unlocking confirmation signal, the locking/unlocking control module 712 drives the motor to execute an unlocking instruction.

In some embodiments, after unlocking the door lock, the smart door lock may further prompt, in a preset prompt manner, the user that the door lock has been unlocked. The preset prompt manner includes, for example, one or more of a plurality of prompt manners such as a voice prompt, displaying an information prompt on the display, and an indicator prompt.

S607: The smart door lock determines whether the second recognition result is that the fingerprint recognition succeeds. If the second recognition result is that the fingerprint recognition succeeds, step S606 is performed; or if the second recognition result is not that the fingerprint recognition succeeds, step S608 is performed.

In some embodiments, after determining that the first recognition result is that the fingerprint recognition fails, the smart door lock may further confirm whether the second recognition result is that the fingerprint recognition succeeds. The second recognition result may be a fingerprint recognition result determined by the fingerprint assembly, or may be a fingerprint recognition result determined by the fingerprint AI processing module.

For example, as shown in FIG. 7, the MCU 71 in the smart door lock determines, by using the fingerprint recognition result confirmation module 711, whether the second recognition result indicates that the fingerprint recognition succeeds. If determining that the second recognition result indicates that the fingerprint recognition succeeds, the smart door lock may send an indication signal to the locking/unlocking control module 712, to indicate the locking/unlocking control module 712 to perform unlocking (that is, return to perform step S606). If determining that the second recognition result indicates that the fingerprint recognition fails, that is, the input fingerprint fails to be verified, the smart door lock may determine that the unlocking fails this time (that is, perform the following step S608).

It should be understood that, for ease of description, in the foregoing examples, the fingerprint recognition process is described by using an example in which a previously obtained fingerprint recognition result is the first recognition result and a subsequently obtained fingerprint recognition result is the second recognition result. However, the smart door lock may first obtain the second recognition result, and then obtain the first recognition result. In addition, the first recognition result may be a fingerprint recognition result determined in the MOC mode or a fingerprint recognition result determined in the MOH mode, and the second recognition result may also be the fingerprint recognition result determined in the MOC mode or the fingerprint recognition result determined in the MOH mode. Fingerprint recognition modes for determining the first recognition result and the second recognition result are different.

S608: The smart door lock determines that the unlocking fails.

In some embodiments, the smart door lock determines that both the fingerprint processing module and the fingerprint AI processing module determine that the fingerprint recognition fails, and may determine that the current unlocking by using the input fingerprint of the user fails.

In some embodiments, after determining that the unlocking fails, the smart door lock may further prompt, in a preset prompt manner, the user that the unlocking fails. The preset prompt manner includes, for example, one or more of a plurality of prompt manners such as a voice prompt, displaying an information prompt on the display, and an indicator prompt.

In some embodiments, after determining that the unlocking fails, the smart door lock may further prompt the user to re-input a fingerprint, to avoid a user identity confirmation failure caused by an abnormal fingerprint input. Further, a quantity of recognition failures may be further preset. If a quantity of verification failures of fingerprints input to the smart door lock reaches the preset quantity of recognition failures, alarm information is sent to an associated terminal device (for example, a mobile phone used to manage the smart door lock), to ensure security.

For example, as shown in FIG. 7, the fingerprint recognition result confirmation module 711 in the MCU 71 of the smart door lock determines that both the first recognition result and the second recognition result indicate that the fingerprint recognition fails, and determines that a currently input fingerprint is not a valid fingerprint. In this case, the fingerprint recognition result confirmation module 711 may determine that the unlocking fails.

Further, the MCU 71 may send an indication signal to the fingerprint assembly 72, to indicate the fingerprint assembly 72 to re-collect and verify the input fingerprint of the user.

In some scenarios, the smart door lock may alternatively determine, in a dual authentication manner based on the first recognition result and the second recognition result, whether the unlocking succeeds.

For example, in step S604, the fingerprint recognition result confirmation module 711 shown in FIG. 7 may obtain the first recognition result. Then, the fingerprint recognition result confirmation module 711 may determine, through step S605, whether the first recognition result is that the fingerprint recognition succeeds.

If the first recognition result is that the fingerprint recognition succeeds, the fingerprint recognition result confirmation module 711 may wait to obtain the second recognition result, for example, confirm, through step S607, whether the second recognition result is that the fingerprint recognition succeeds. If the second recognition result is also that the fingerprint recognition succeeds, the fingerprint recognition result confirmation module 711 may determine that the input fingerprint is a valid fingerprint, and step S606 may be performed to determine that the unlocking succeeds. If the second recognition result is that the fingerprint recognition fails, the fingerprint recognition result confirmation module 711 may finally determine that the input fingerprint is not a valid fingerprint. Even if the previous first recognition result is that the recognition succeeds, step S608 may be performed to determine that the unlocking fails.

If the first recognition result is that the fingerprint recognition fails, the fingerprint recognition result confirmation module 711 may determine that the input fingerprint is not a valid fingerprint, and step S608 may be performed to determine that the unlocking fails. In this process, if the fingerprint recognition result confirmation module 711 has received the second recognition result, the second recognition result may be discarded; or if the fingerprint recognition result confirmation module 711 has not received the second recognition result temporarily, the second recognition result may be discarded after the second recognition result is received subsequently. Alternatively, if the fingerprint recognition result confirmation module 711 has not received the second recognition result temporarily, the fingerprint recognition result confirmation module 711 may indicate a module (for example, the fingerprint AI processing module 73 or the fingerprint assembly 72) that has not sent a fingerprint recognition result to stop determining the fingerprint recognition result.

Alternatively, after obtaining the first recognition result, the fingerprint recognition result confirmation module 711 may temporarily not confirm the first recognition result, but wait to obtain the second recognition result. Then, the fingerprint recognition result confirmation module 711 determines, based on the first recognition result and the second recognition result, whether the input fingerprint is a valid fingerprint. After determining that both the first recognition result and the second recognition result are that the fingerprint recognition succeeds, the fingerprint recognition result confirmation module 711 may determine that the input fingerprint is a valid fingerprint, and step S606 may be performed to determine that the unlocking succeeds. After determining that either the first recognition result or the second recognition result is that the fingerprint recognition fails, the fingerprint recognition result confirmation module 711 may determine that the input fingerprint is not a valid fingerprint, and step S608 may be performed to determine that the unlocking fails.

In other words, the smart door lock obtains the first recognition result and the second recognition result by concurrently performing fingerprint recognition in the MOC mode and fingerprint recognition in the MOH mode. Through dual authentication of the two fingerprint recognition results, it is ensured that the input fingerprint that is successfully verified is a valid fingerprint, thereby further improving security of the smart door lock.

In this way, the smart door lock concurrently performs the fingerprint recognition in the MOC mode and the fingerprint recognition in the MOH mode, thereby meeting a fingerprint recognition requirement in a general scenario. Additionally, because there is no need to wait for the initialization process of the fingerprint AI processing module in the general scenario, fingerprint recognition efficiency is improved.

In addition, a high-accuracy fingerprint recognition requirement is also met in some special scenarios in which a fingerprint of a person is unclear due to a wet or dirty hand or the like, a fingerprint of an elderly person may fade due to aging, or a fingerprint of a child is not clear enough or is excessively small due to ongoing growth. Moreover, in these scenarios, the user does not need to repeatedly input a fingerprint a plurality of times, thereby improving user experience. Furthermore, in these scenarios, because the fingerprint recognition in the MOH mode is performed through AI image processing, a success rate of fingerprint recognition can be improved. Therefore, a possibility of successfully unlocking at one time can be further improved through fingerprint recognition in a dual fingerprint recognition mode.

In this way, the fingerprint recognition method provided in this embodiment of this application can be applied to a plurality of fingerprint recognition scenarios. In the plurality of fingerprint recognition scenarios, fingerprint recognition accuracy and fingerprint recognition efficiency of the smart door lock can be balanced, thereby improving user experience.

In addition, by concurrently performing fingerprint recognition in the MOC mode and in the MOH mode, after fingerprint recognition in either fingerprint recognition mode succeeds, the smart door lock may determine that the fingerprint recognition succeeds this time. In this way, a fingerprint recognition failure caused by a problem such as an image acquisition anomaly or a black image that occurs due to a single fingerprint recognition mode is avoided.

In some scenarios, the fingerprint AI processing module can directly perform fingerprint recognition without performing the initialization process. In this case, in step S601, after collecting the input fingerprint, the smart door lock may directly perform fingerprint recognition by using the fingerprint processing module, and perform fingerprint recognition by using the fingerprint AI processing module.

For example, after collecting an input fingerprint of a user A, the smart door lock determines that the fingerprint recognition fails, and the user A fails to perform unlocking. After a short period of time, the smart door lock collects an input fingerprint of a user B. At this time, the fingerprint AI processing module has not yet slept, or the fingerprint AI processing module is configured not to sleep. In this case, in this fingerprint recognition process, the smart door lock may perform fingerprint recognition by using both the fingerprint processing module and the fingerprint AI processing module.

In some scenarios, the first recognition result is a fingerprint recognition result determined by the fingerprint AI processing module. In this case, after determining the first recognition result, the smart door lock may determine, based on the first recognition result, whether to unlock the door lock. If determining that the first recognition result is that the fingerprint recognition succeeds, the smart door lock may determine to unlock the door lock. If determining that the first recognition result is that the fingerprint recognition fails, the smart door lock may determine not to unlock the door lock, end the fingerprint recognition process, and prompt the user to re-input a fingerprint.

That is, after first obtaining a fingerprint recognition result determined by a module with high fingerprint recognition accuracy, the smart door lock may directly determine, based on the fingerprint recognition result, whether to unlock the door lock, and determine whether to start a next fingerprint recognition process. There is no need to wait for a fingerprint recognition result determined by a module with low fingerprint recognition accuracy, thereby improving single-time fingerprint recognition efficiency while ensuring the fingerprint recognition accuracy and the security of the smart door lock.

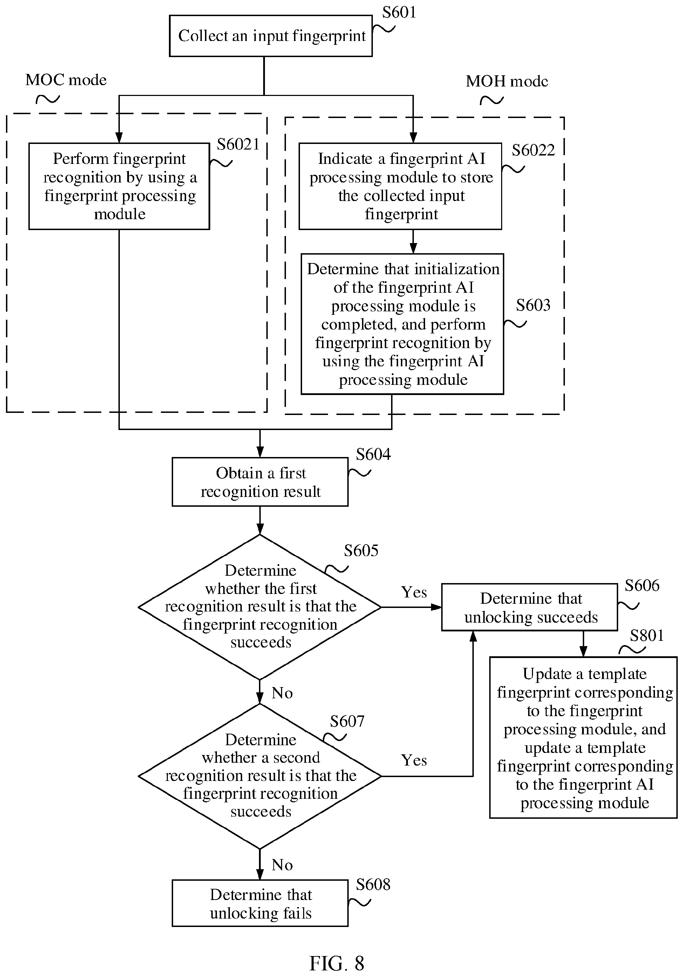

For example, as shown in FIG. 8, after step S606, the method may further include step S801.

S801: The smart door lock updates the template fingerprint corresponding to the fingerprint processing module, and updates the template fingerprint corresponding to the fingerprint AI processing module.

In some embodiments, when determining that the input fingerprint is successfully verified, the smart door lock may determine that the fingerprint recognition succeeds. Then, the smart door lock may update the template fingerprints in the fingerprint assembly and the fingerprint AI processing module based on the successfully verified input fingerprint, to improve a success rate of subsequent fingerprint recognition.

For example, as shown in FIG. 7, after determining, by using the fingerprint recognition result confirmation module 711, that the fingerprint recognition succeeds, and controlling, by using the locking/unlocking control module 712, the door lock to be unlocked, the MCU 71 in the smart door lock may send indication information to the fingerprint assembly 72 and the fingerprint AI processing module 73. The indication information indicates the fingerprint assembly 72 and the fingerprint AI processing module 73 to update the stored template fingerprints based on the input fingerprint for the current verification.

Correspondingly, after receiving the indication information, the fingerprint assembly 72 compares the input fingerprint with the first template fingerprint stored in the storage module 723, to determine a pixel with optimal quality, thereby updating the first template fingerprint. Then, the fingerprint assembly 72 stores an updated first template fingerprint into the storage module 723.

Correspondingly, after receiving the indication information, the fingerprint AI processing module 73 performs, based on the input fingerprint, processing such as image enhancement on the second template fingerprint stored in the storage module 731, and updates the second template fingerprint through a self-learning process. Then, the fingerprint AI processing module 73 stores an updated second template fingerprint into the storage module 731.

For a process of updating the template fingerprints by the fingerprint assembly and the fingerprint AI processing module, refer to the conventional technology. This is not limited in this embodiment of this application.

In this way, update frequencies of the template fingerprints in the fingerprint assembly and the fingerprint AI processing module are increased, thereby avoiding problems of a slow fingerprint recognition speed and a reduced success rate caused by not updating the template fingerprints for a long time.

In some embodiments, the smart door lock may determine, based on a user operation, whether to enable the dual fingerprint recognition mode, to meet a personalized use requirement of the user.

If the dual fingerprint recognition mode is enabled, the smart door lock concurrently performs fingerprint recognition based on the MOC mode and fingerprint recognition based on the MOH mode by using the method described in step S601 to step S608. Alternatively, the fingerprint AI processing module does not need to be initialized, and the smart door lock may perform fingerprint recognition by using both the fingerprint processing module and the fingerprint AI processing module after collecting the input fingerprint in step S601.

If the dual fingerprint recognition mode is disabled, the smart door lock may determine, after collecting the input fingerprint in step S601, whether the initialization of the fingerprint AI processing module has been completed. If the initialization has been completed, fingerprint recognition may be performed by using the fingerprint AI processing module, that is, fingerprint recognition is performed based on the MOH mode. If the initialization has not been completed, fingerprint recognition may be first performed by using the fingerprint processing module in the fingerprint assembly, that is, fingerprint recognition is performed based on the MOC mode. Alternatively, the fingerprint AI processing module does not need to be initialized, and the smart door lock may select, after collecting the input fingerprint in step S601, the fingerprint AI processing module with high fingerprint recognition accuracy to perform fingerprint recognition.

In some examples, the smart door lock may enable or disable the dual fingerprint recognition mode in response to an operation performed by the user on a panel of the smart door lock.

In some other examples, the smart door lock can establish a communication connection to a terminal device (such as a mobile phone or a tablet), and an application used to manage the smart door lock, such as the AI Life application, is installed on the terminal device. The terminal device indicates, in response to an operation performed by the user on the smart door lock in the AI Life application, the smart door lock to enable or disable the dual fingerprint recognition mode.

Optionally, the smart door lock may establish a communication connection to the terminal device in a plurality of manners such as a Bluetooth connection, a Wi-Fi connection, an NFC connection, and a USB interface connection.

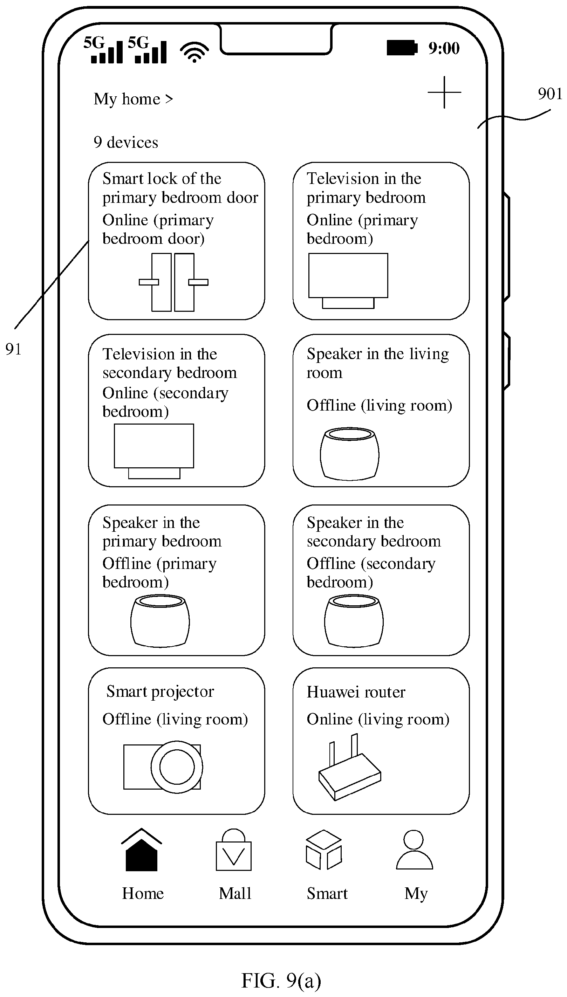

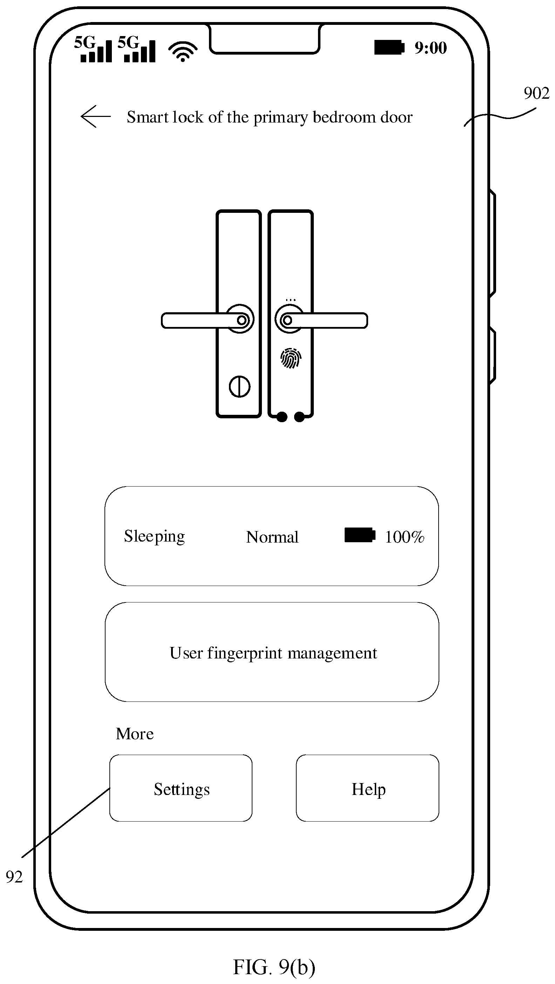

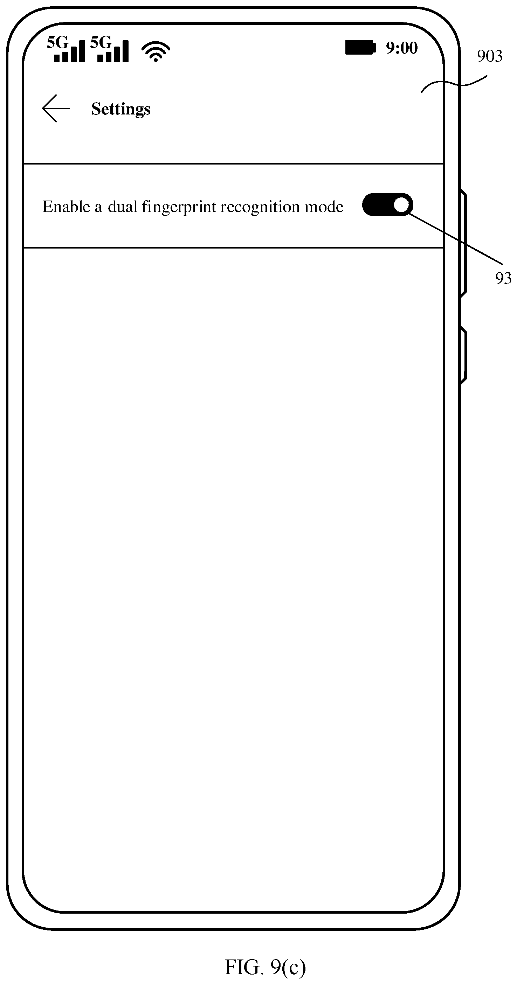

For example, on an interface 901 shown in FIG. 9(a), the terminal device starts the AI Life application, detects an operation of tapping a control 91 by the user, and determines that the user indicates to operate a smart door lock of a primary bedroom door. In this case, the terminal device may display an interface 902 shown in FIG. 9(b). In response to an operation of tapping, by the user, a settings control 92 displayed on the interface 902, the terminal device determines that the user indicates to set the dual fingerprint recognition mode of the smart door lock, and may display an interface 903 shown in FIG. 9(c). The terminal device sends indication information to the smart door lock of the primary bedroom door in response to an operation performed by the user on an on/off control 93 on the interface 903, to indicate the smart door lock to enable or disable the dual fingerprint recognition mode.

For example, in response to the operation performed by the user on the on/off control 93 on the interface 903, the terminal device determines that the user indicates to enable the dual fingerprint recognition mode of the smart door lock, and may send the indication information to the smart door lock. Correspondingly, after receiving the indication information, the smart door lock may enable the dual fingerprint recognition mode. After subsequently detecting the input fingerprint, the smart door lock concurrently performs fingerprint recognition in the MOC mode and in the MOH mode.

It should be understood that in the foregoing embodiments, an example in which the electronic device 100 is a smart door lock is used to describe the fingerprint recognition method provided in this embodiment of this application. The fingerprint recognition method may also be applied to another electronic device. For example, the fingerprint recognition method may be applied to an electronic device such as a smart television or a notebook computer. For a specific implementation in each electronic device, refer to the foregoing embodiments. In different electronic devices, that the electronic device determines to perform unlocking may also be understood as that the electronic device determines to release locking, to display an interface after the unlocking.

In addition, in the foregoing embodiments, two fingerprint recognition modes, namely, the MOC mode and the MOH mode, are used as an example to describe the fingerprint recognition method provided in embodiments of this application. It should be understood that a plurality of fingerprint recognition modes with same or different fingerprint recognition accuracies may be configured in the electronic device, to implement concurrent execution of fingerprint recognition processes in the plurality of fingerprint recognition modes. These fingerprint recognition modes may include the MOC mode and the MOH mode. Details are not described in this embodiment of this application. The plurality of fingerprint recognition modes with same or different fingerprint recognition accuracies may be a plurality of different fingerprint recognition modes. For example, the plurality of modes provide different fingerprint recognition algorithms, software and hardware support manners, or covered fingerprint-recognizable scenarios.

Optionally, in a case in which different fingerprint recognition modes have different fingerprint recognition accuracies, it may be understood that in some scenarios, fingerprint recognition accuracy of one fingerprint recognition mode is higher than fingerprint recognition accuracy of the other fingerprint recognition mode in a statistical sense. However, accuracies of all instances of fingerprint recognition in one fingerprint recognition mode are not necessarily higher than those of the other fingerprint recognition mode. Alternatively, fingerprint recognition accuracies of different fingerprint recognition modes do not differ greatly. However, in terms of an algorithm capability, software and hardware capabilities, or the like, potential fingerprint recognition accuracy of one fingerprint recognition mode should be higher than potential fingerprint recognition accuracy of the other fingerprint recognition mode in terms of a design objective.

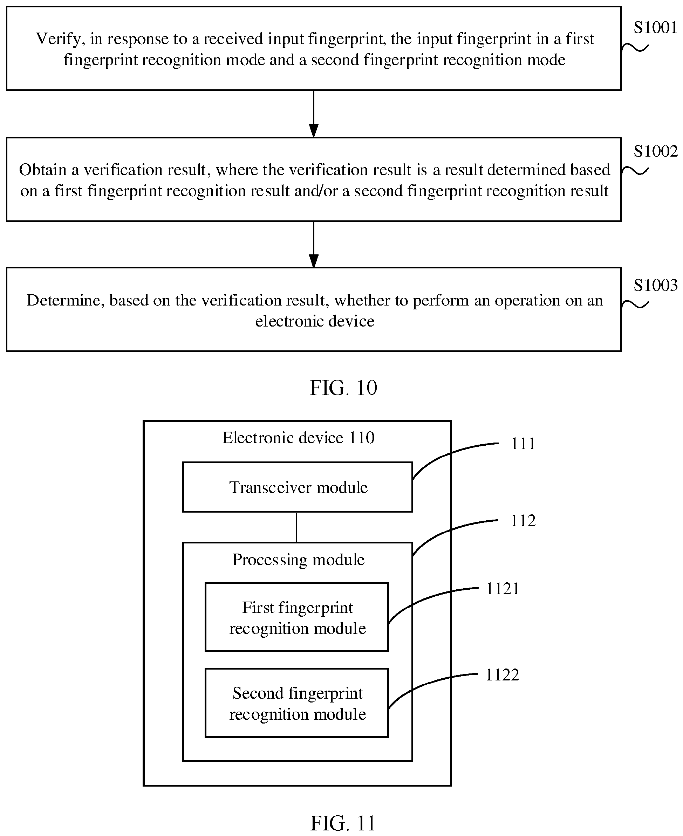

For example, FIG. 10 is a schematic flowchart of another fingerprint recognition method according to an embodiment of this application. As shown in FIG. 10, the method may include the following steps.

S1001: Verify, in response to a received input fingerprint, the input fingerprint in a first fingerprint recognition mode and a second fingerprint recognition mode.

The first fingerprint recognition mode and the second fingerprint recognition mode are different fingerprint recognition modes. For example, the first fingerprint recognition mode is a MOC mode, and the second fingerprint recognition mode is a MOH mode. For another example, the first fingerprint recognition mode is the MOH mode, and the second fingerprint recognition mode is the MOC mode.

For example, the first fingerprint recognition mode is the MOC mode, the second fingerprint recognition mode is the MOH mode, and fingerprint recognition accuracy of the second fingerprint recognition mode is higher than fingerprint recognition accuracy of the first fingerprint recognition mode.

For example, as shown in FIG. 6, after collecting the input fingerprint, an electronic device may concurrently perform fingerprint recognition in the MOC mode and fingerprint recognition in the MOH mode, to balance fingerprint recognition efficiency and fingerprint recognition accuracy.

For example, as shown in FIG. 7, the electronic device is a smart door lock. After collecting the input fingerprint by using a fingerprint sensor 721 in a fingerprint assembly 72, the smart door lock may verify the input fingerprint by using a fingerprint processing module 722 in the fingerprint assembly 72, and verify the input fingerprint by using a fingerprint AI processing module 73.

In some embodiments, after receiving the input fingerprint, the electronic device determines that the second fingerprint recognition mode does not enter a fingerprint-recognizable state. In this case, the electronic device may first verify the input fingerprint in the first fingerprint recognition mode.

In some examples, before the second fingerprint recognition mode enters the fingerprint-recognizable state, the electronic device determines a previous first recognition result in the first fingerprint recognition mode.

In this case, the electronic device may stop driving the second fingerprint recognition mode to enter the recognizable state, for example, stop an initialization process of the second fingerprint recognition mode. Instead, the electronic device directly determines a verification result based on the first recognition result. Therefore, fingerprint recognition efficiency of the electronic device is improved.

Alternatively, after determining that the second fingerprint recognition mode enters the fingerprint-recognizable state, the electronic device no longer verifies the input fingerprint in the second fingerprint recognition mode. Instead, the electronic device directly determines the verification result based on the previously determined first recognition result. Therefore, fingerprint recognition efficiency of the electronic device is improved.

Alternatively, after the second fingerprint recognition mode enters the fingerprint-recognizable state, and the electronic device obtains a subsequent second recognition result determined in the second fingerprint recognition mode, the electronic device directly discards the second recognition result, and directly determines the verification result based on the first recognition result. Therefore, fingerprint recognition efficiency of the electronic device is improved.

Alternatively, after the second fingerprint recognition mode enters the fingerprint-recognizable state, and the electronic device obtains the subsequent second recognition result determined in the second fingerprint recognition mode, the electronic device determines the verification result in a dual authentication manner based on the previously determined first recognition result and the subsequently determined second recognition result. Therefore, fingerprint recognition reliability of the electronic device is improved.

In some embodiments, after receiving the input fingerprint, the electronic device determines that the second fingerprint recognition mode does not enter the fingerprint-recognizable state. In this case, the electronic device may first store the input fingerprint. Then, after the second fingerprint recognition mode enters the fingerprint-recognizable state, the electronic device may verify the stored input fingerprint in the second fingerprint recognition mode.

In this way, before the second fingerprint recognition mode enters the fingerprint-recognizable state, the electronic device first stores the input fingerprint, so that after the second fingerprint recognition mode subsequently enters the fingerprint-recognizable state, the electronic device can directly obtain the stored input fingerprint, to perform fingerprint verification in the second fingerprint recognition mode. In this way, a user does not need to input a fingerprint again, thereby reducing difficulty of a user operation and improving user experience.

In some embodiments, after receiving the input fingerprint, the electronic device determines that the second fingerprint recognition mode enters the fingerprint-recognizable state. In this case, the electronic device may verify the input fingerprint separately in the first fingerprint recognition mode and the second fingerprint recognition mode.

In some embodiments, the second fingerprint recognition mode may directly enter the fingerprint-recognizable state. For example, initialization does not need to be performed. In this case, after obtaining the input fingerprint, the electronic device may verify the input fingerprint in both the first fingerprint recognition mode and the second fingerprint recognition mode, thereby improving single-time fingerprint recognition efficiency and fingerprint recognition accuracy.

S1002: Obtain the verification result, where the verification result is a result determined based on a first fingerprint recognition result and/or a second fingerprint recognition result.

The first fingerprint recognition result is a fingerprint recognition result determined in the first fingerprint recognition mode, the second fingerprint recognition result is a fingerprint recognition result determined in the second fingerprint recognition mode, and the verification result indicates whether the input fingerprint is successfully verified.

For example, as shown in FIG. 7, the electronic device is a smart door lock. A fingerprint recognition result confirmation module 711 in an MCU 71 of the smart door lock may obtain a fingerprint recognition result determined by the fingerprint processing module 722 in the fingerprint assembly 72, and obtain a fingerprint recognition result determined by the fingerprint AI processing module 73. Then, the fingerprint recognition result confirmation module 711 may determine a verification result based on either or both of the two obtained fingerprint recognition results.

In some embodiments, when determining, in the first fingerprint recognition result or the second fingerprint recognition result, that a previously obtained fingerprint recognition result is that fingerprint recognition succeeds, the electronic device directly determines that the obtained verification result indicates that the input fingerprint is successfully verified.

For example, the electronic device concurrently performs fingerprint recognition on the input fingerprint in the first fingerprint recognition mode and the second fingerprint recognition mode. In this case, fingerprint recognition results may be successively determined in the two fingerprint recognition modes.

For example, according to the related content described in FIG. 6, the previously determined fingerprint recognition result is the first recognition result, and the first recognition result may be the first fingerprint recognition result determined in the first fingerprint recognition mode, or may be the second fingerprint recognition result determined in the second fingerprint recognition mode. For another example, a subsequently determined fingerprint recognition result is the second recognition result, and the second recognition result may be the first fingerprint recognition result determined in the first fingerprint recognition mode, or may be the second fingerprint recognition result determined in the second fingerprint recognition mode.

In this way, the electronic device may determine, based on the previously obtained fingerprint recognition result, whether the input fingerprint is successfully verified and whether a corresponding operation, for example, unlocking, can be performed, thereby effectively improving fingerprint recognition efficiency of the electronic device.

In some embodiments, when the verification result determined based on the previously obtained fingerprint recognition result indicates that the input fingerprint is successfully verified, the electronic device may discard a subsequently obtained fingerprint recognition result in the first fingerprint recognition result or the second fingerprint recognition result, or stop obtaining a subsequent fingerprint recognition result.

In this way, after determining, based on the previously obtained fingerprint recognition result, that the input fingerprint is successfully verified, the electronic device may directly discard a fingerprint recognition result that is no longer needed and that is obtained subsequently, or stop obtaining the subsequent fingerprint recognition result, thereby saving computing resources of the electronic device and reducing power consumption.

In some embodiments, when determining, in the first fingerprint recognition result or the second fingerprint recognition result, that a previously obtained fingerprint recognition result is that fingerprint recognition fails, the electronic device determines the verification result based on a subsequently obtained fingerprint recognition result.

For example, when determining that the subsequently obtained fingerprint recognition result is that fingerprint recognition succeeds, the electronic device determines that the obtained verification result indicates that the input fingerprint is successfully verified. When determining that the subsequently obtained fingerprint recognition result is that fingerprint recognition fails, the electronic device determines that the obtained verification result indicates that the input fingerprint fails to be verified.

For example, the electronic device first determines, in the MOC mode, that the input fingerprint fails to be verified, and then the electronic device can further obtain the subsequently determined fingerprint recognition result based on the MOH mode that is concurrently executed. Fingerprint recognition accuracy of the MOH mode is higher than fingerprint recognition accuracy of the MOC mode. Therefore, in some scenarios in which a fingerprint of a person is unclear due to a wet or dirty hand or the like, a fingerprint of an elderly person may fade due to aging, or a fingerprint of a child is not clear enough or is excessively small due to ongoing growth, the electronic device can still improve the fingerprint recognition accuracy through fingerprint recognition in the MOH mode.

In this way, when determining that the previously obtained fingerprint recognition result is that verification fails, the electronic device can alternatively determine, based on the subsequently obtained fingerprint recognition result, whether the input fingerprint is successfully verified, thereby increasing a success rate of fingerprint recognition for a single fingerprint input by the user.

In some embodiments, when determining that both the first fingerprint recognition result and the second fingerprint recognition result are that fingerprint recognition succeeds, the electronic device determines that the verification result indicates that the input fingerprint is successfully verified. When determining that either the first fingerprint recognition result or the second fingerprint recognition result is that fingerprint recognition fails, the electronic device determines that the verification result indicates that the input fingerprint fails to be verified.

In this way, the electronic device determines the verification result in a dual authentication manner, thereby improving reliability of the verification result.

S1003: Determine, based on the verification result, whether to perform an operation on the electronic device.

For example, the electronic device is a smart door lock. In this case, the smart door lock may determine, based on the verification result, whether to perform an unlocking operation of the smart door lock.

For example, as shown in FIG. 7, the electronic device is a smart door lock. After determining the verification result, the fingerprint recognition result confirmation module 711 in the MCU 71 of the smart door lock may determine a corresponding operation to be performed by the smart door lock. For example, if determining that the verification result indicates that the input fingerprint is successfully verified, the fingerprint recognition result confirmation module 711 may send an indication signal (for example, unlocking indication) to a locking/unlocking control module 712, to indicate the locking/unlocking control module 712 to perform unlocking.

In this way, the electronic device concurrently triggers fingerprint recognition in the first fingerprint recognition mode and fingerprint recognition in the second fingerprint recognition mode in response to the received input fingerprint. In this way, fingerprint recognition accuracy and fingerprint recognition efficiency of the electronic device can be balanced, thereby improving user experience.

In some embodiments, when the verification result indicates that the input fingerprint is successfully verified, the electronic device may further: by using the input fingerprint, update a first template fingerprint corresponding to the first fingerprint recognition mode, and/or update a second template fingerprint corresponding to the second fingerprint recognition mode.

In this way, update frequencies of template fingerprints in fingerprint recognition modules corresponding to the first fingerprint recognition mode and the second fingerprint recognition mode are increased, thereby avoiding problems of a slow fingerprint recognition speed and a reduced success rate caused by not updating the template fingerprints for a long time.

Optionally, the electronic device may be further configured to perform functions of the smart door lock in the foregoing embodiments. Details are not described herein again.

The fingerprint recognition method provided in embodiments of this application is described in detail above with reference to FIG. 6 to FIG. 10. The following describes in detail an electronic device provided in an embodiment of this application with reference to FIG. 11.

In a possible design, FIG. 11 is a diagram of a structure of an electronic device according to an embodiment of this application. As shown in FIG. 11, the electronic device 110 may include a transceiver module 111 and a processing module 112. The processing module 112 includes a first fingerprint recognition module 1121 and a second fingerprint recognition module 1122. The electronic device 110 may be configured to implement functions of the electronic device or the smart door lock in the foregoing method embodiments.

Optionally, the transceiver module 111 is configured to support the electronic device 110 in performing S601 in FIG. 6.

Optionally, the processing module 112 is configured to support the electronic device 110 in performing S6021 to S608 in FIG. 6, and/or is configured to support the electronic device 110 in performing S801 in FIG. 8.

Optionally, the first fingerprint recognition module 1121 is configured to support the electronic device 110 in performing S6021 in FIG. 6. The second fingerprint recognition module 1122 is configured to support the electronic device 110 in performing S6022 and S603 in FIG. 6. Alternatively, the first fingerprint recognition module 1121 is configured to support the electronic device 110 in performing S6022 and S603 in FIG. 6. The second fingerprint recognition module 1122 is configured to support the electronic device 110 in performing S6021 in FIG. 6.

Optionally, when the electronic device 110 is a smart door lock, the processing module 112 of the electronic device 110 further includes an unlocking module (not shown in FIG. 11). The processing module 112 sends an unlocking indication to the unlocking module after determining that the verification result indicates that the input fingerprint is successfully verified. After receiving the unlocking indication, the unlocking module may be configured to control the smart door lock to perform unlocking.

The transceiver module may include a receiving module and a sending module, may be implemented by a transceiver or a transceiver-related circuit component, and may be a transceiver or a transceiver unit. Operations and/or functions of the modules in the electronic device 110 are respectively intended to implement corresponding procedures of the fingerprint recognition method in the foregoing method embodiments. All related content of the steps in the foregoing method embodiments may be cited in function descriptions of corresponding functional units. For brevity, details are not described herein again.

Optionally, the electronic device 110 shown in FIG. 11 may further include a storage module (not shown in FIG. 11), and the storage module stores a program or instructions. When the transceiver module 111 and the processing module 112 execute the program or the instructions, the electronic device 110 shown in FIG. 11 is enabled to perform the fingerprint recognition method in the foregoing method embodiments.

For technical effects of the electronic device 110 shown in FIG. 11, refer to the technical effects of the fingerprint recognition method provided in the foregoing method embodiments. Details are not described herein again.

In addition to a form of the electronic device 110, the technical solutions provided in this application may also be a functional unit or a chip in the electronic device, or an apparatus used in combination with the electronic device.

An embodiment of this application further provides a chip system, including a processor. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing module (digital signal processor, DSP), a microcontroller unit (microcontroller unit, MCU), a programmable controller (programmable logic device, PLD), or another integrated chip.

It should be understood that the steps in the foregoing method embodiments may be completed by using a hardware integrated logic circuit in the processor, or by using instructions in a form of software. The steps of the method disclosed with reference to embodiments of this application may be directly performed by a hardware processor, or may be performed by using a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the fingerprint recognition method in the foregoing embodiments.

An embodiment of this application further provides a computer program product. When the computer program product runs on a computer, the computer is enabled to perform the foregoing related steps, to implement the fingerprint recognition method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the fingerprint recognition method in the foregoing method embodiments.

The apparatus, the computer-readable storage medium, the computer program product, or the chip provided in embodiments of this application is configured to perform the corresponding method provided above. Therefore, for beneficial effects that can be achieved, refer to the beneficial effects in the corresponding method provided above. Details are not described herein again.

Methods or algorithm steps described in combination with the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an application-specific integrated circuit (application-specific integrated circuit, ASIC).

The description of the foregoing implementations allows a person skilled in the art to clearly understand that, for the purpose of convenient and brief description, division of the foregoing functional modules is used as merely an example for description. During actual application, the foregoing functions can be allocated to different functional modules for implementation based on a requirement. That is, an internal structure of the apparatus is divided into different functional modules to implement all or some of the functions described above. For a detailed working process of the foregoing system, apparatus, and unit, refer to the corresponding process in the foregoing method embodiments. Details are not described herein again.

In the several embodiments provided in this application, it should be understood that the disclosed methods may be implemented in other manners. The apparatus embodiment described above is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, the functional units in embodiments of this application may be integrated into one processing unit, or each of the units may exist alone physically, or two or more units are integrated into one unit. The integrated unit may be implemented in a form of hardware, or may be implemented in a form of a software functional unit.

The computer-readable storage medium includes but is not limited to any one of the following: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A fingerprint recognition method, applied to an electronic device, wherein the method comprises:
verifying, in response to a received input fingerprint, the input fingerprint in a first fingerprint recognition mode and a second fingerprint recognition mode;
obtaining a verification result, wherein the verification result is a result determined based on a first fingerprint recognition result and/or a second fingerprint recognition result, the first fingerprint recognition result is a fingerprint recognition result determined in the first fingerprint recognition mode, the second fingerprint recognition result is a fingerprint recognition result determined in the second fingerprint recognition mode, and the verification result indicates whether the input fingerprint is successfully verified; and
determining, based on the verification result, whether to perform an operation on the electronic device.

2. The method according to claim 1, wherein the obtaining a verification result comprises:
when determining, in the first fingerprint recognition result or the second fingerprint recognition result, that a previously obtained fingerprint recognition result is that fingerprint recognition succeeds, directly determining that the obtained verification result indicates that the input fingerprint is successfully verified.

3. The method according to claim 2, wherein the method further comprises:
discarding a subsequently obtained fingerprint recognition result in the first fingerprint recognition result or the second fingerprint recognition result; or stopping obtaining a subsequent fingerprint recognition result.

4. The method according to claim 1, wherein the obtaining a verification result comprises:
when determining, in the first fingerprint recognition result or the second fingerprint recognition result, that a previously obtained fingerprint recognition result is that fingerprint recognition fails, determining the verification result based on a subsequently obtained fingerprint recognition result.

5. The method according to claim 4, wherein the determining the verification result based on a subsequently obtained fingerprint recognition result comprises:
when determining that the subsequently obtained fingerprint recognition result is that fingerprint recognition succeeds, determining that the obtained verification result indicates that the input fingerprint is successfully verified; or when determining that the subsequently obtained fingerprint recognition result is that fingerprint recognition fails, determining that the obtained verification result indicates that the input fingerprint fails to be verified.

6. The method according to claim 1, wherein the obtaining a verification result comprises:
when determining that both the first fingerprint recognition result and the second fingerprint recognition result are that fingerprint recognition succeeds, determining that the verification result indicates that the input fingerprint is successfully verified; or when determining that either the first fingerprint recognition result or the second fingerprint recognition result is that fingerprint recognition fails, determining that the verification result indicates that the input fingerprint fails to be verified.

7. The method according to any one of claims 1 to 6, wherein when the verification result indicates that the input fingerprint is successfully verified, the method further comprises:
by using the input fingerprint, updating a first template fingerprint corresponding to the first fingerprint recognition mode, and/or updating a second template fingerprint corresponding to the second fingerprint recognition mode.

8. The method according to any one of claims 1 to 7, wherein the verifying, in response to a received input fingerprint, the input fingerprint in a first fingerprint recognition mode and a second fingerprint recognition mode comprises:
after receiving the input fingerprint, determining that the second fingerprint recognition mode does not enter a fingerprint-recognizable state; and
verifying the input fingerprint in the first fingerprint recognition mode.

9. The method according to claim 8, wherein the method further comprises:
storing the input fingerprint for recognition in the second fingerprint recognition mode; and
after the second fingerprint recognition mode enters the fingerprint-recognizable state, verifying the input fingerprint in the second fingerprint recognition mode.

10. The method according to any one of claims 1 to 7, wherein the verifying, in response to a received input fingerprint, the input fingerprint in a first fingerprint recognition mode and a second fingerprint recognition mode comprises:
after receiving the input fingerprint, determining that the second fingerprint recognition mode enters a fingerprint-recognizable state; and
verifying the input fingerprint separately in the first fingerprint recognition mode and the second fingerprint recognition mode.

11. The method according to any one of claims 1 to 10, wherein fingerprint recognition accuracy of the second fingerprint recognition mode is higher than fingerprint recognition accuracy of the first fingerprint recognition mode.

12. The method according to any one of claims 1 to 11, wherein the electronic device is a smart door lock, and the determining, based on the verification result, whether to perform an operation on the electronic device comprises:
determining, based on the verification result, whether to perform an unlocking operation of the smart door lock.

13. An electronic device, wherein the electronic device comprises a transceiver module and a processing module, and the processing module comprises a first fingerprint recognition module and a second fingerprint recognition module;
the transceiver module is configured to receive an input fingerprint;
the processing module is configured to: verify the input fingerprint by using the first fingerprint recognition module, to determine a first fingerprint recognition result; and verify the input fingerprint by using the second fingerprint recognition module, to determine a second fingerprint recognition result, wherein the first fingerprint recognition module corresponds to a first fingerprint recognition mode, and the second fingerprint recognition module corresponds to a second fingerprint recognition mode;
the processing module is further configured to obtain a verification result, wherein the verification result is a result determined based on the first fingerprint recognition result and/or the second fingerprint recognition result, and the verification result indicates whether the input fingerprint is successfully verified; and
the processing module is further configured to determine, based on the verification result, whether to perform an operation on the electronic device.

14. The electronic device according to claim 13, wherein
the processing module is further configured to: when determining, in the first fingerprint recognition result or the second fingerprint recognition result, that a previously obtained fingerprint recognition result is that fingerprint recognition succeeds, directly determine that the obtained verification result indicates that the input fingerprint is successfully verified.

15. The electronic device according to claim 14, wherein
the processing module is further configured to: discard a subsequently obtained fingerprint recognition result in the first fingerprint recognition result or the second fingerprint recognition result; or stop obtaining a subsequent fingerprint recognition result.

16. The electronic device according to claim 13, wherein
the processing module is further configured to: when determining, in the first fingerprint recognition result or the second fingerprint recognition result, that a previously obtained fingerprint recognition result is that fingerprint recognition fails, determine the verification result based on a subsequently obtained fingerprint recognition result.

17. The electronic device according to claim 16, wherein
the processing module is further configured to: when determining that the subsequently obtained fingerprint recognition result is that fingerprint recognition succeeds, determine that the obtained verification result indicates that the input fingerprint is successfully verified; or when determining that the subsequently obtained fingerprint recognition result is that fingerprint recognition fails, determine that the obtained verification result indicates that the input fingerprint fails to be verified.

18. The electronic device according to claim 13, wherein
the processing module is further configured to: when determining that both the first fingerprint recognition result and the second fingerprint recognition result are that fingerprint recognition succeeds, determine that the verification result indicates that the input fingerprint is successfully verified; or when determining that either the first fingerprint recognition result or the second fingerprint recognition result is that fingerprint recognition fails, determine that the verification result indicates that the input fingerprint fails to be verified.

19. The electronic device according to any one of claims 13 to 18, wherein
the processing module is further configured to: by using the input fingerprint, update a first template fingerprint corresponding to the first fingerprint recognition mode, and/or update a second template fingerprint corresponding to the second fingerprint recognition mode.

20. The electronic device according to any one of claims 13 to 19, wherein
the processing module is further configured to: after the transceiver module receives the input fingerprint, determine that the second fingerprint recognition module does not enter a fingerprint-recognizable state; and verify the input fingerprint by using the first fingerprint recognition module.

21. The electronic device according to claim 20, wherein
the processing module is further configured to store, by using the second fingerprint recognition module, the input fingerprint for recognition in the second fingerprint recognition mode; and
the processing module is further configured to: after the second fingerprint recognition mode enters the fingerprint-recognizable state, verify the input fingerprint in the second fingerprint recognition mode.

22. The electronic device according to any one of claims 13 to 19, wherein
the processing module is further configured to: after the transceiver module receives the input fingerprint, determine that the second fingerprint recognition module enters a fingerprint-recognizable state; and
the processing module is further configured to verify the input fingerprint separately by using the first fingerprint recognition module and the second fingerprint recognition module.

23. The electronic device according to any one of claims 13 to 22, wherein fingerprint recognition accuracy of the second fingerprint recognition module is higher than fingerprint recognition accuracy of the first fingerprint recognition module.

24. The electronic device according to any one of claims 13 to 23, wherein the electronic device is a smart door lock, and the electronic device further comprises an unlocking module;
the processing module is further configured to send an unlocking indication to the unlocking module after determining that the verification result indicates that the input fingerprint is successfully verified;
the unlocking module is configured to receive the unlocking indication; and
the unlocking module is further configured to control the smart door lock to perform unlocking.

25. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 1 to 12.

26. A computer-readable storage medium, wherein the computer-readable storage medium comprises a computer program, and when the computer program is run on an electronic device, the electronic device is enabled to perform the method according to any one of claims 1 to 12.

27. A computer program product, wherein when the computer program product runs on a computer, the computer is enabled to perform the method according to any one of claims 1 to 12.
